# EUROPEAN PATENT SPECIFICATION

(11) **EP 2 762 704 B1**
(45) Date of publication and mention of the grant of the patent: **18.05.2016**
(21) Application number: 12836691.1
(22) Date of filing: 01.10.2012
(51) Int. Cl.: F02B 75/28, F02B 23/08, F02B 67/00

(54) **OPPOSED-PISTON ENGINE**
MOTOR MIT VERSETZTEN KOLBEN
MOTEUR À PISTONS OPPOSÉS

(30) Priority: 30.09.2011 WO PCT/JP2011/072664
(43) Date of publication of application: 06.08.2014
(73) Proprietor: Ishikawa Energy Research Co., Ltd., Gunma 379-2311 (JP)
(72) Inventor: ISHIKAWA Mitsuru, Midori-shi Gunma 379-2311 (JP); KANO Toru, Midori-shi Gunma 379-2311 (JP)
(74) Representative: Hoffmann Eitle
(86) International application number: PCT/JP2012/075411
(87) International publication number: WO 2013/047878

(56) References cited:
- WO-A1-2009/152592
- JP-A- S5 698 532
- JP-A- S6 445 902
- JP-A- H09 242 501
- JP-A- 2007 046 534
- JP-A- 2007 327 370
- JP-A- 2008 223 657
- JP-A- 2009 138 718
- JP-A- 2011 524 488
- US-A- 1 486 583

## Description

### Technical field

The present invention relates to an opposed-piston engine which can enhance thermal efficiency of an engine due to a high heat insulation function, can enhance energy efficiency by realizing a high compression ratio of a fuel/air mixed gas in a cylinder, and can lower vibrations of the engine.

### [Background art]

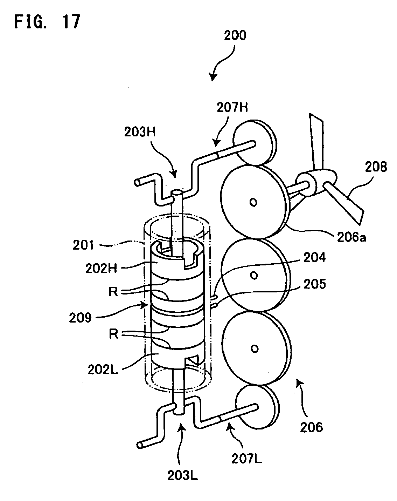

(1) Conventionally, as disclosed in patent literature 1 and patent literature 2 described below, for example, an opposed-piston engine is configured such that pistons reciprocate linearly at left and right sides in one cylinder arranged in the horizontal lateral direction in a state where heads of the pistons face each other in an opposed manner. An intermediate portion between the piston heads which face each other in an opposed manner in the cylinder forms a combustion chamber, and the pistons are operated due to ignition explosion of a fuel/air mixed gas (hereinafter simply referred to as "mixed gas") so that outputs are taken out from the engine and are used as a power source for an external actuator such as a power generator.
(2) As shown in Fig. 17, an opposed-piston engine of a 2-stroke cycle diesel put into practice by Junkers GmbH is configured such that upper and lower crank outputs 207H, 207L are taken out from upper and lower pistons 202H, 202L by way of respective crank mechanisms 203H, 203L, a group of gears 206 is interposed between the crank outputs 207H, 207L, and a propeller 208 which constitutes an external actuator is driven by one output gear 206a out of the group of gears 206. Scavenging and exhaust ports 204, 205 are arranged on an inner peripheral portion of the cylinder 201, and the flow of a working medium into or out of the cylinder 201 is controlled based on the reciprocating movement of the pistons 202H, 202L. In this structure, piston rings R are arranged on the pistons 202H, 202L. An outer peripheral portion of the piston is elongated in the stroke direction for acquiring appropriate port timing with the scavenging and exhaust ports, the piston ring R which also performs a function of stabilizing the behavior of the piston is also arranged on a lower end of the piston thus preventing a lubricant from directly entering a combustion chamber 209. Accordingly, distances in the stroke direction of the upper and lower pistons 202H, 202L are increased thus eventually giving rise to a drawback that a size of the engine is increased. Further, a reciprocation load including the pistons 202H, 202L is also increased thus giving rise to a drawback also with respect to the reduction of friction. Since the engine is a 2-stroke engine and hence, the oil consumption is also large, and a combustion control of the engine is also difficult. Further, although patent literatures 1, 2, 3 disclose a 4-stroke cycle engine in the embodiments of these patent literatures, it is expected that a volume of the combustion chamber becomes large in view of drawings showing the structures, and these structures are not suitable for realizing high compression.
(3) With respect to a single-unit engine having 1 cylinder and 1 piston, there has been known an engine which adopts the side valve (SV) arrangement where a combustion chamber is added to an outer portion of the cylinder, and the engine having such structure has been conventionally a mainstream. However, in such an engine having the structure where the combustion chamber is disposed outside the cylinder, it is difficult to acquire a high compression ratio thus lowering thermal efficiency of the engine. As a result, in the single-unit engine having 1 cylinder and 1 piston, the structure where a combustion chamber is mounted on a head of a cylinder as represented by a 4-cycle engine having overhead valves (OHV) or overhead cams (OHC) has been the main stream up to the present.
(4) Further, as a typical example of the above-mentioned horizontal opposed-piston engine, there has been known a horizontal opposed-piston engine where outputs are taken out from reaction stresses generated by reactions in a reciprocating engine (see patent literature 3, for example). This engine has two sets of engines where each engine has a combustion chamber, the ignition explosion is performed in the respective combustion chambers, and a crankshaft which is connected in an interlocking manner with both pistons is driven by making use of approaching and moving away of both pistons to and from each other, and a rotational power of the crankshaft is taken out from the engine.

### Citation List

### Patent literature

PTL 1: JP-A-2007-46534
PTL 2: JP-A-8-93498
PTL 3: JP-A-2008-280988
JP 2009-138718 discloses a method for cooling the combustion air in a two-cylinder engine. To this end, water is injected to cool the combustion air remaining in the cylinder during a period from 50 crank angle degrees before a compression stroke to immediately before compression.

### Summary of invention

### Technical problems

The above-mentioned prior arts disclose the typical horizontal opposed-piston engines which have the common technical features that the cylinder is mainly formed of one horizontal cylinder except for a portion thereof, the pistons face each other in an opposed manner and are separated and approach from and to each other, and the space defined between the piston heads which face each other in an opposed manner forms the combustion chamber and intake and exhaust ports are formed on a side surface of the combustion chamber.

In case of the 2-stroke cycle engine manufactured by Junkers GmbH, to acquire appropriate port timing between the scavenging and exhaust ports formed in the inner peripheral portion of the cylinder and the piston, the combustion under a control in the scavenging and exhaust step based on the reciprocating movement in the stroke direction, there exist drawbacks with respect to the oil consumption and the fuel control. Accordingly, a drive control using an intake valve and an exhaust valve of a 4-stroke cycle is more effective as a countermeasure to cope with such drawbacks. However, with the structural examples disclosed in patent literatures 1, 2, 3 showing such a 4-stroke cycle engine, a volume of the combustion chamber cannot be decreased and hence, a high compression ratio cannot be expected whereby the enhancement of thermal efficiency of the engine is difficult.

In case of the horizontal opposed-piston engine known in general where the engine is driven by 1 crankshaft, it is necessary to offset a cylinder thus giving rise to a drawback that a couple is generated. Further, in realizing the heat insulation of the combustion chamber as one of methods of enhancing thermal efficiency, because of the presence of the cylinder heads on both ends of the cylinder, it is necessary to apply heat insulation to the respective cylinder heads thus increasing a size and a weight of the engine.

That is, none of patent literatures 1, 2, 3 discloses nor suggests the technical concept of providing the more compact structure by which both the enhancement of thermal efficiency through the acquirement of a high compression ratio, heat insulation and the like of an engine and the lowering of vibrations in a horizontal opposed-piston engine can be acquired.

The present invention has been made to overcome the above-mentioned drawbacks, and it is an object of the present invention to provide an opposed-piston engine which forms a part of a combustion chamber outside a cylinder for acquiring heat insulation of the combustion chamber, enhances thermal efficiency by improving heat insulation efficiency of constitutional members of the engine as much as possible, and exhibits favorable thermal efficiency while having the compact structure by realizing the high compression ratio in the combustion chamber and lowering vibrations or the like.

### Solution to Problem

The present invention provides an opposed-piston engine where left and right piston heads are arranged to face each other in the inside of a cylinder formed by joining left and right engine blocks to each other, the opposed-piston engine comprising: a joint space which is formed by flat recessed portions formed on end surfaces of both piston heads; a capacity space formed by bulging in an approximately flat shape in the direction orthogonal to the axial direction of the cylinder outside a side wall of a center portion of the cylinder in the circumferential direction; air intake and exhaust valves which are arranged on one side of the capacity space; and a spark plug which is arranged on the other side of the capacity space, wherein the joint space and the capacity space are communicated with each other.

The present invention also provides the opposed-piston engine where the capacity space is constituted of: a semicircular arcuate recessed portion which is communicated with the joint space; left and right enlarged portions which are formed in a semicircular shape in an enlarged manner toward left and right sides from the semicircular arcuate recessed portion; and a combustion space which gradually increases a thickness thereof toward the left and right enlarged portions from the semicircular arcuate recessed portion.

The present invention also provides the opposed-piston engine where the air intake and exhaust valves are arranged in the left and right enlarged portions, and a spark plug is arranged on a lower portion of a center portion between the left and right enlarged portions.

The present invention also provides the opposed-piston engine where the flat recessed portion has an approximately parabolic shape.

The present invention also provides the opposed-piston engine where the flat recessed portion has an approximately normal or inversely trapezoidal shape.

The present invention also provides the opposed-piston engine, wherein a water jacket is formed in an outer periphery of the horizontal cylinder, cooling water inlets for the water jacket are respectively arranged independently on left and right side portions of the water jacket corresponding to left and right piston sides, and a cooling water outlet is arranged on a portion of the water jacket corresponding to an exhaust port on one piston side.

The present invention also provides the opposed-piston engine, wherein a water jacket is formed in an outer periphery of the horizontal cylinder, cooling water outlets for the water jacket are arranged on left and right side portions of the water jacket independently corresponding to left and right piston sides, and a cooling water inlet is arranged on a portion of the water jacket corresponding to an intake port on one piston side.

### Advantageous effects of the Invention

According to the invention called for in claim 1, the opposed-piston engine includes: a joint space which is formed by flat recessed portions formed on end surfaces of both piston heads; a capacity space formed by bulging in an approximately flat shape in the direction orthogonal to the axial direction of the cylinder outside a side wall of a center portion of the cylinder in the circumferential direction; air intake and exhaust valves which are arranged on one side of the capacity space; and a spark plug which is arranged on the other side of the capacity space, wherein the joint space and the capacity space are communicated with each other. Accordingly, the combustion chamber having the compact structure can be realized. Further, an S/V ratio (ratio of a surface to a volume of the combustion chamber) can be decreased compared to a case where a plurality of combustion chambers are provided for every piston, and a high compression ratio can be acquired in the combustion chamber and hence, it is possible to acquire an advantageous effect that combustion efficiency can be enhanced whereby thermal efficiency can be improved. The left and right pistons are provided to one horizontal cylinder and hence, a piston stroke can be divided with the use of the left and right pistons so that high expansion ratio of a mixed gas ignited in the combustion chamber can be acquired compared to a conventional engine. Further, the left and right piston heads are arranged to face each other in an opposed manner in the inside of a cylinder formed by joining left and right engine blocks to each other, and the cylinder adopts the split structure. Accordingly, working and assembling of the cylinder are facilitated, and working in forming the combustion chamber (for example, working of the surrounding of the air intake and exhaust valves mounted on the combustion chamber) outside the cylinder can be facilitated. Further, a water jacket can be formed easily in the outer periphery of the horizontal cylinder compared to the case where the horizontal cylinder is formed of one cylinder. Still further, the invention called for in claim 1 also has advantageous effects such as the enhancement of efficiency of manufacturing the left and right cylinder unit bodies by casting.

According to the invention called for in claim 2, the capacity space is constituted of: a semicircular arcuate recessed portion which is communicated with the joint space; left and right enlarged portions which are formed in a semicircular shape toward left and right sides from the semicircular arcuate recessed portion; and a combustion space which gradually increases a thickness thereof toward the left and right enlarged portions from the semicircular arcuate recessed portion. Accordingly, the combustion chamber having the compact structure can be realized and hence, a high compression ratio can be realized in the combustion chamber compared to a combustion chamber of a conventional engine whereby it is possible to acquire an advantageous effect that the combustion efficiency can be enhanced so that thermal efficiency can be improved.

According to the invention called for in claim 3, the distal end of the spark plug is arranged on the lower portion of the center portion in one of the left and right enlarged portions, and the distal end portions of the air intake and exhaust valves are arranged in the other of the left and right enlarged portions. Accordingly, the combustion chamber having the compact structure can be realized and hence, a high compression ratio can be realized in the combustion chamber compared to a combustion chamber of a conventional engine and whereby it is possible to acquire an advantageous effect that the combustion efficiency can be enhanced so that thermal efficiency can be improved.

According to the invention called for in claim 4, the flat recessed portion has an approximately parabolic shape. Accordingly, the combustion chamber can be made as small as possible thus realizing the combustion chamber having the compact structure whereby, compared to a combustion chamber of a conventional engine, a high compression ratio in the combustion chamber can be acquired thus giving rise to an advantageous effect that combustion efficiency can be enhance and thermal efficiency is improved.

According to the invention called for in claim 5, the flat recessed portions have an approximately normal or inversely trapezoidal shape communicating with the outside of the end surfaces of the left and right piston heads. Accordingly, the combustion chamber can be made as small as possible thus realizing the combustion chamber having the compact structure whereby, compared to a combustion chamber of a conventional engine, a high compression ratio in the combustion chamber can be acquired thus giving rise to an advantageous effect that combustion efficiency can be enhance and thermal efficiency is improved. Further, a pressure can be concentrated in the vicinity of the center of the end surface of the left or right piston head and hence, vibrations on the engine can be largely decreased thus giving rise to an advantageous effect that combustion efficiency can be enhanced and thermal efficiency is improved.

According to the invention called for in claim 6, cooling water inlets for the water jacket are respectively independently arranged on left and right side portions of the water jacket corresponding to left and right piston sides, and a cooling water outlet is arranged on a portion of the water jacket corresponding to an exhaust port on one piston side. Particularly with respect to the combustion chamber which is required to enhance cooling efficiency with the simple structure, efficiency of cooling the surrounding of the air intake and exhaust valves and the ignition plug can be enhanced without additionally providing a complicated design to the water jacket structure whereby it is possible to acquire an advantageous effect that thermal efficiency of the engine can be enhanced.

According to the invention called for in claim 7, the cooling water outlets for the water jacket are arranged independently on the left and right side portions of the water jacket corresponding to left and right piston sides, while the cooling water inlet is arranged on the portion of the water jacket corresponding to the intake port on one piston side. Due to such a constitution, particularly with respect to the combustion chamber which is required to enhance cooling efficiency with the simple structure, cooling efficiency of the surrounding around the air intake and exhaust valves and the ignition plug without providing the complicated additional design to the water structure and hence, it is possible to acquire an advantageous effect that the thermal efficiency of the engine can be enhanced.

### Brief Description of Drawings

Fig. 1 is a cross-sectional view for explaining the internal constitution of an opposed-piston engine according to one embodiment of the present invention.
Fig. 2 is an enlarged view for schematically explaining a shape of the combustion chamber of the opposed-piston engine according to the embodiment of the present invention.
Fig. 3 is an enlarged view for schematically explaining the constitution of air intake and exhaust valves of the opposed-piston engine according to the embodiment of the present invention.
Fig. 4A is a perspective view for explaining a shape of the combustion chamber of the opposed-piston engine according to the embodiment of the present invention.
Fig. 4B is a cross-sectional view for explaining the shape of the combustion chamber of the opposed-piston engine according to the embodiment of the present invention.
Fig. 4C is a side view for explaining the shape of the combustion chamber of the opposed-piston engine according to the embodiment of the present invention.
Fig. 4D is a side view for explaining the shape of the combustion chamber of the opposed-piston engine according to the embodiment of the present invention.
Fig. 4E is a cross-sectional view for explaining the shape of the combustion chamber of the opposed-piston engine according to the embodiment of the present invention.
Fig. 5A is a view for explaining a gasket which constitutes a seal constitutional member according to the embodiment of the present invention.
Fig. 5B is a cross-sectional view for explaining the mounting of the gasket which constitutes the seal constitutional member according to the embodiment of the present invention.
Fig. 6A is a perspective view for explaining the constitution of a two-axis output type opposed-piston engine according to the embodiment of the present invention.
Fig. 6B is a perspective view for explaining the constitution of the two-axis output type opposed-piston engine according to the embodiment of the present invention.
Fig. 6C is a perspective view for explaining the constitution of a one-axis output type opposed-piston engine according to the embodiment of the present invention.
Fig. 6D is a side view for explaining a cooling circuit of the left and right cylinders of the opposed-piston engine according to the embodiment of the present invention.
Fig. 7 is a view for explaining the constitution of a group of interlocking gears of the two-axis output type opposed-piston engine according to the embodiment of the present invention.
Fig. 8 is a view for explaining the constitution of a group of interlocking gears of the one-axis output type opposed-piston engine according to the embodiment of the present invention.
Fig. 9 is a view for explaining the constitution of another embodiment of the group of interlocking gears of the two-axis output type opposed-piston engine according to the embodiment of the present invention.
Fig. 10 is a view for explaining the constitution of another embodiment of the group of interlocking gears of the two-axis output type opposed-piston engine according to the embodiment of the present invention.
Fig. 11 is a view for explaining the constitution of another embodiment of the group of interlocking gears of the two-axis output type opposed-piston engine according to the embodiment of the present invention.
Fig. 12 is a view for explaining the constitution of another embodiment of the group of interlocking gears of the two-axis output type opposed-piston engine according to the embodiment of the present invention.
Fig. 13 is a view for schematically explaining the constitution of a lubrication circuit of the opposed-piston engine according to the embodiment of the present invention.
Fig. 14 is a view for explaining a modification of mounting positions of a spark plug and an air intake and exhaust valve in the combustion chamber of the opposed-piston engine according to the embodiment of the present invention.
Fig. 15 is an enlarged view for explaining the modification of the mounting positions of the spark plug and the air intake and exhaust valve in the combustion chamber of the opposed-piston engine according to the embodiment of the present invention.
Fig. 16 is a view for explaining a modification of the number of spark plugs mounted on the combustion chamber of the opposed-piston engine according to the embodiment of the present invention.
Fig. 17 is a view for explaining an opposed-piston engine of Junkers Company.
Fig. 18 is a cross-sectional view for explaining the inner constitution of the opposed-piston engine according to the embodiment of the present invention.
Fig. 19A is a perspective view for explaining the constitution of the two-axis output type opposed-piston engine according to the embodiment of the present invention.
Fig. 19B is a perspective view for explaining the constitution of the two-axis output type opposed-piston engine according to the embodiment of the present invention.
Fig. 20 is an enlarged view for schematically explaining the modification of the constitution of the air intake and exhaust valve of the opposed-piston type engine according to the embodiment of the present invention.
Fig. 21 is a perspective view for explaining the shape of the combustion chamber of the opposed-piston engine according to the embodiment of the present invention.
Fig. 22 is a side view for explaining the cooling circuit of the left and right cylinders of the opposed-piston engine according to the embodiment of the present invention.
Fig. 23A is a cross-sectional view for explaining a modification of the shape of the combustion chamber of the opposed-piston engine according to the embodiment of the present invention.
Fig. 23B is a side view for explaining the modification of the shape of the combustion chamber of the opposed-piston engine according to the embodiment of the present invention.
Fig. 23C is a side view for explaining the modification of the shape of the combustion chamber of the opposed-piston engine according to the embodiment of the present invention.
Fig. 24 is a view for explaining the constitution of the modification of a group of interlocking gears of the two-axis output type opposed-piston engine according to the embodiment of the present invention.
Fig. 25 is a view for schematically explaining the constitution of a modification of a pump type of the lubrication circuit of the opposed-piston engine according to the embodiment of the present invention.
Fig. 26A is a cross-sectional view for explaining the modification of the shape of the combustion chamber of the opposed-piston engine according to the embodiment of the present invention.
Fig. 26B is a side view for explaining the modification of the shape of the combustion chamber of the opposed-piston engine according to the embodiment of the present invention.
Fig. 26C is a side view for explaining the modification of the shape of the combustion chamber for the opposed-piston engine according to the embodiment of the present invention.

### Description of Embodiments

According to one mode for carrying out the present invention, there is provided an opposed-piston engine which is configured such that left and right pistons which are movable independently from each other are housed in the inside of a horizontal cylinder in a state where heads of the respective left and right pistons face each other in an opposed manner, one combustion chamber is formed outside the horizontal cylinder in a state where the combustion chamber is communicated with a space defined between the left and right piston heads whereby an output is taken out by approaching each other or moving away from each other of the left and right pistons caused by ignition explosion in the inside of the combustion chamber.

The horizontal cylinder is formed by joining left and right cylinder unit bodies, and joint portions of the left and right cylinder unit bodies are sealed by a seal forming member such as a gasket, and the combustion chamber which is formed in a communicable manner with the inside of the horizontal cylinder is formed of a heat insulation material.

Intake and exhaust valves are arranged parallel to each other on one side of the horizontal cylinder, and valve operating axes of the air intake and exhaust valves are inclined with respect to a horizontal axis of the horizontal cylinder, and the air intake and exhaust valves and spark plugs for mixed gas ignition are arranged in the inside of the combustion chamber so as to minimize a volume of the combustion chamber.

The intake valve and the exhaust valve are arranged in a state where the air intake and exhaust valves face each other in an opposed manner, and the operating axes of the air intake and exhaust valves are aligned with each other.

The left and right crank mechanisms are connected in an interlocking manner to bottom portions of the left and right pistons, outputs from the left and right pistons are taken out from left and right crank output shafts of the left and right crank mechanisms or left and right neighboring shafts arranged adjacent to the left and right crank output shafts respectively by way of two shafts consisting of left and right shafts, and the two respective shafts are rotated in directions opposite to each other whereby rotational reaction forces of the two respective shafts cancel each other thus lowering vibrations.

Outputs from the left and right pistons are taken out from left and right crank output shafts of the left and right crank mechanisms or left and right neighboring shafts arranged adjacent to the left and right crank output shafts respectively by way of two shafts consisting of left and right shafts, and an external actuator is connected in an interlocking manner to the two respective shafts in a state where the external actuators are movable independently from each other.

The left and right crank mechanisms are connected in an interlocking manner to bottom portions of the left and right pistons, a group of interlocking gears is interposed between the left and right crank mechanisms, and crank outputs from the left and right crank mechanisms are taken out in a state where the crank outputs are merged at an output shaft provided to the group of interlocking gears, and the gear output shaft of the group of interlocking gears is arranged offset from a center axis along which the left and right pistons face each other in an opposed manner.

As the first embodiment, an exhaust port communicated with a combustion chamber of the horizontal cylinder is arranged on an upper portion of an engine case, and an intake port through which a mixed gas is taken into the combustion chamber is arranged on a lower portion of the engine case.

As the first embodiment, a water jacket is formed in an outer periphery of the horizontal cylinder, cooling water inlets for the water jacket are respectively arranged independently on left and right side portions of the water jacket corresponding to left and right piston sides, and a cooling water outlet is arranged on a portion of the water jacket corresponding to an exhaust port on one piston side.

As the second embodiment, an exhaust port communicated with a combustion chamber of the horizontal cylinder is arranged on a lower portion of an engine case, and an intake port through which a mixed gas is taken into the combustion chamber is arranged on an upper portion of the engine case.

As the second embodiment, a water jacket is formed in an outer periphery of the horizontal cylinder, cooling water outlets for the water jacket are respectively independently arranged on left and right side portions of the water jacket corresponding to left and right piston sides, and a cooling water inlet is arranged on a portion of the water jacket corresponding to an intake port on one piston side.

### [First embodiment]

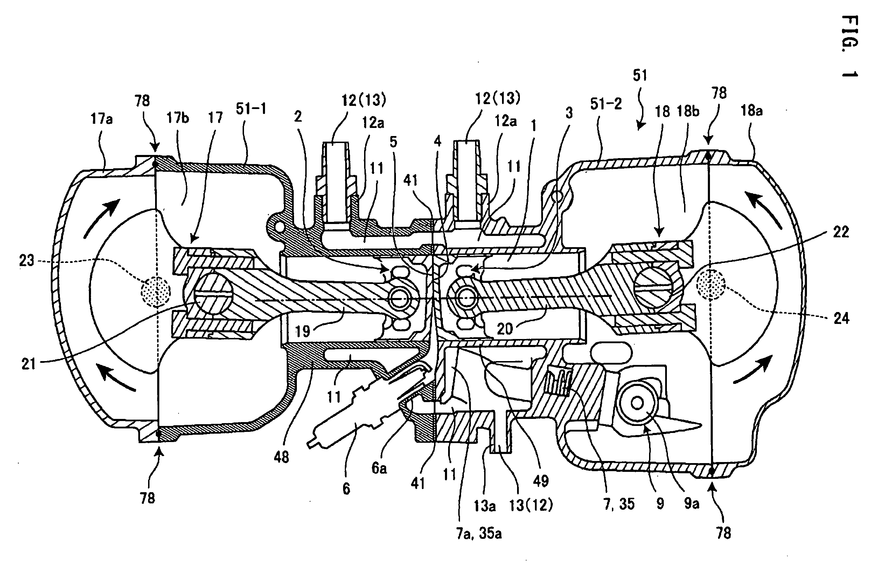

Hereinafter, the first embodiment of the present invention is specifically explained in detail by reference to Fig. 1 to Fig. 14.

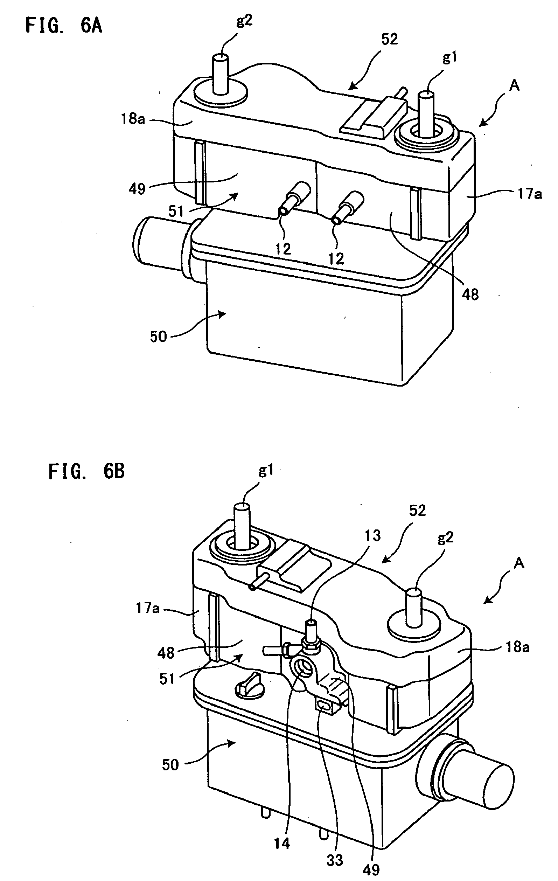

As shown in Fig. 6A, the opposed-piston engine A of the embodiment of the present invention includes an engine block 51 as a body thereof, and a gear box 52 and an oil pan 50 are arranged above and below the engine block 51 respectively in a stacked manner.

As shown in Fig. 1, the engine block 51 is constituted of left and right engine blocks 51-1, 2 split in two in the lateral direction, and left and right crank covers 17a, 18a which close the open end portions of the left and right engine blocks 51-1, 2. The left and right engine blocks 51-1, 2 are respectively integrally formed by casting as follows. In center portions of the inside of the left and right engine blocks 51-1, 2, left and right cylinder (left and right cylinder block) unit bodies 48, 49 are formed. On the periphery of the left and right engine blocks 51-1, 2, a combustion chamber S described later, valve mounting holes 35a, 7a for mounting air intake and exhaust valves 7, 35 which are communicated with the combustion chamber S, a plug mounting hole 6a for mounting a spark plug 6, a water jacket 11 for circulating cooling water, mounting portions for mounting cooling water pipes 12a, 13a in which a cooling water inlet 12 and a cooling water outlet 13 are formed respectively, left and right crank mechanism housing portions 17b, 18b which house left and right crank mechanisms 17, 18 which are connected to the left and right pistons 2, 3 in an interlocking manner and the like are integrally formed by casting. A horizontal cylinder 1, the combustion chamber S and the water jacket 11 are formed by integrally abutting the left and right engine blocks 51-1, 2 formed by casting in this manner with a gasket 41 sandwiched therebetween, and spaces opened at the respective end portions of the left and right engine blocks 51-1, 2 are closed by the left and right crank covers 17a, 18a whereby the engine block 51 are finally constituted.

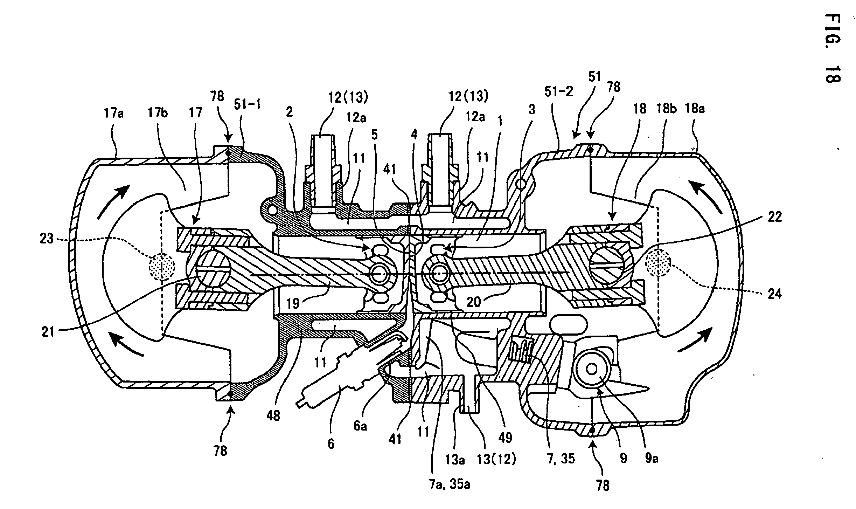

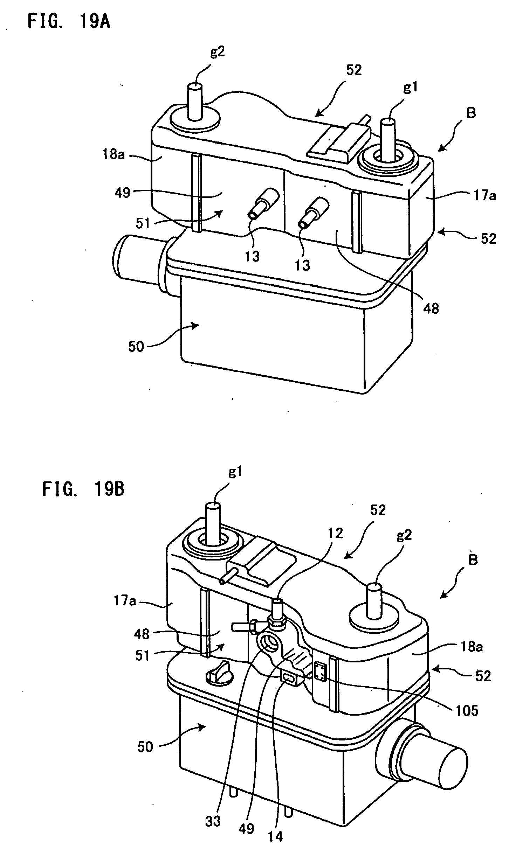

As shown in Fig. 18, Fig. 19A, B, it is desirable to constitute abutting positions 78 of the left and right engine blocks 51-1, 2 and the left and right crank covers 17a, 18a such that the abutting positions 78 are disposed close to the center of the engine block 51 within a range where the left and right crank mechanism housing portions 17b, 18b and the like can be integrally formed with the left and right engine blocks 51-1, 2 by casting. The left and right engine blocks 51-1, 2 are formed using a well-known graphite cast iron (for example, FCD 450) which is excellent in abrasion resistance, vibration absorbing property, heat resistance and the like so as to stably resist the abrasion due to reciprocation of the pistons and an impact due to the explosion in the combustion chamber. However, since graphite cast iron has a high specific gravity, the use of graphite cast iron becomes a factor which makes the engine block 51 heavy. On the other hand, the left and right crank covers 17a, 18a are not exposed to the above-mentioned severe environment and hence, the left and right crank covers 17a, 18a are formed using aluminum. Due to the above-mentioned constitution, it is possible to reduce the use of graphite cast iron in forming walls of the left and right engine blocks 51-1, 2, the left and right crank mechanism housing portions 17b, 18b and the like and, at the same time, portions of the left and right crank covers 17a, 18a are formed using aluminum having a low specific gravity whereby the weight of the engine block 51 can be largely reduced.

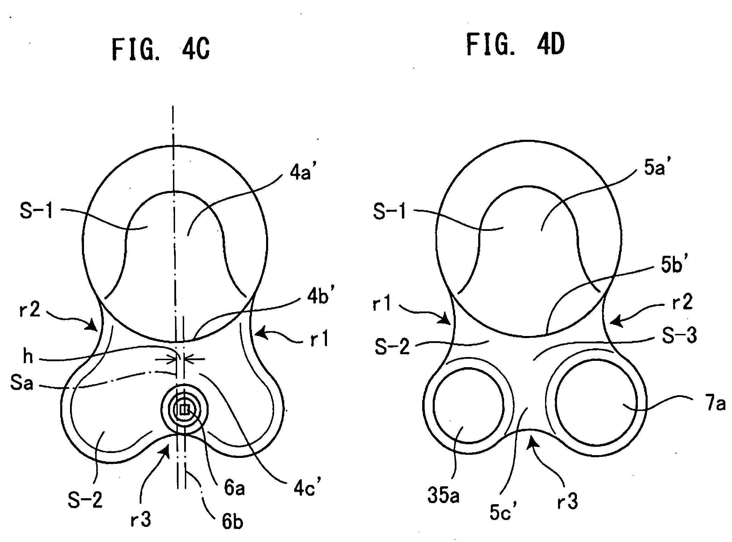

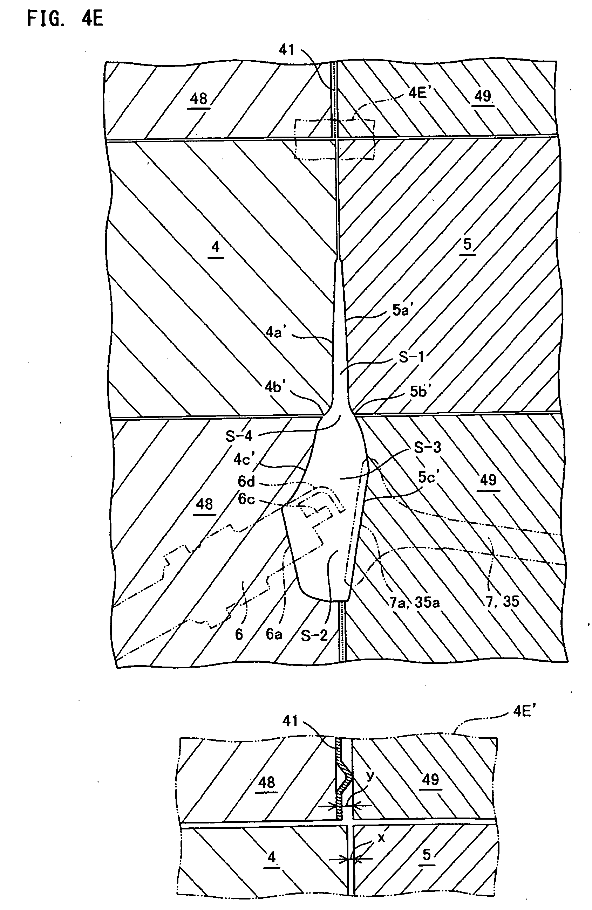

Further, one horizontal cylinder 1 is formed by joining the left cylinder (left cylinder block) unit body 48 and the right cylinder (right cylinder block) unit body 49 to each other. In the horizontal cylinder 1 which is formed horizontally, the left and right pistons 2, 3 are individually slidably accommodated in such a manner that the left and right piston heads 4, 5 face each other in an opposed manner. By adopting the two-split structure where the left and right cylinder unit bodies 48, 49 are joined to form one horizontal cylinder 1, it is possible to acquire the following various advantageous effects. That is, working and assembling of the horizontal cylinder 1 is facilitated. Working for forming the combustion chamber S outside the horizontal cylinder 1 (for example, working of the surrounding around an air intake valve 7 and an air exhaust valve 35 described later (see Fig. 4) which are mounted on the combustion chamber S) is facilitated. The formation of a water jacket 11 described later in the outer periphery of the horizontal cylinder 1 is facilitated compared to a case where the horizontal cylinder 1 is formed using one cylinder so that the efficiency in casting the left and right cylinder unit bodies 48, 49 is improved.

Further, since the left and right pistons 2, 3 are provided to one horizontal cylinder 1, the stroke of the piston can be divided into respective strokes of the left and right pistons 2, 3 in the horizontal cylinder 1 whereby the opposed-piston engine A can acquire a high expansion ratio of mixed gas ignited in the combustion chamber S compared to a conventional engine.

The combustion chamber S which is communicated with a space or a clearance defined between the left and right piston heads 4, 5 is configured such that a mixed gas is filled into the combustion chamber S and is ignited and exploded in the combustion chamber S so that the left and right pistons 2, 3 are slidably moved in the directions toward or away from each other and piston outputs are taken out from such piston operation by way of crank mechanisms described later.

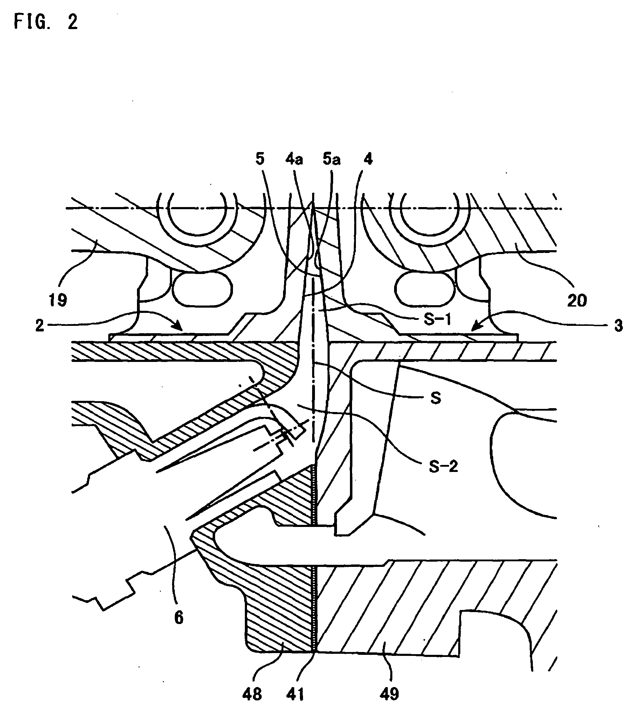

With respect to the combustion chamber S, as specifically shown in Fig. 2, a joint space S-1 (sub combustion chamber) which is defined by portions of inclined surfaces 4a, 5a of the left and right piston heads 4, 5 when the left and right piston heads 4, 5 approach close to each other is communicated with a capacity space S-2 (main combustion chamber) formed by bulging a side wall of the center portion of the horizontal cylinder 1. Here, the capacity space S-2 (main combustion chamber) which substantially constitute the combustion chamber S is a space which excludes a clearance between the left and right piston heads 4 , 5 which face each other in an opposed manner (for example, a space provided by taking into account precision tolerance of components, thermal expansion, and behavior of the piston heads or the like), the above-mentioned joint space S-1, and a space occupied by a spark plug 6, the air intake valve 7, the air exhaust valve 35 and the like described later. In this manner, the capacity space S-2 is formed outside of the side wall of the horizontal cylinder 1 in parallel to the horizontal cylinder 1.

As shown in Fig. 4C, Fig. 4D and Fig. 4E, in the combustion chamber S, in a state where the left and right piston heads 4, 5 approach close to each other, flat recessed portions 4a' , 5a' are formed on end surfaces of both piston heads 4, 5 in a substantially parabolic shape from a lower edge portion to an area above the center portions of the piston heads 4, 5, and a space defined by the flat recessed portions 4a', 5a' is set as the joint space S-1 (sub combustion chamber) in a state where both piston heads approach close to each other.

The joint space S-1 is communicated with the capacity space S-2 formed outside a body of the horizontal cylinder 1 by bulging side walls of the center portion of the horizontal cylinder 1 in an approximately flat shape along the cross-sectional direction of the horizontal cylinder 1.

The shape of the capacity space S-2 (main combustion chamber) is formed of semicircular arcuate recessed portions 4b', 5b' which are communicated with a lower edge portion of the joint space S-1, left and right enlarged portions 4c', 5c' which are formed in an enlarged manner from the semicircular arcuate recessed portions 4b', 5b' in a semicircular arcuate shape toward left and right sides, and a combustion space S-3 where a thickness of the space increases gradually downward from the semicircular arcuate recessed portions 4b' , 5b' to the left and right enlarged portions 4c', 5c'.

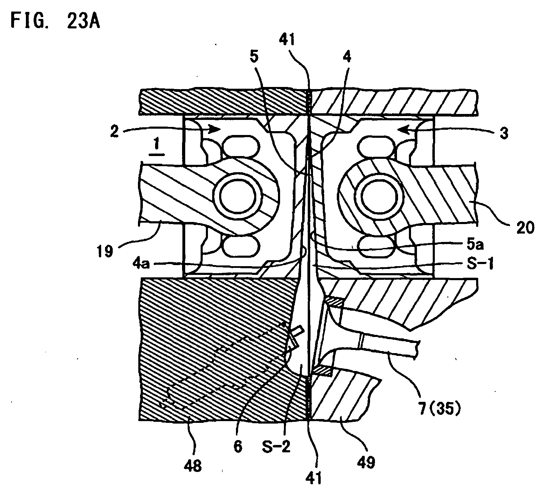

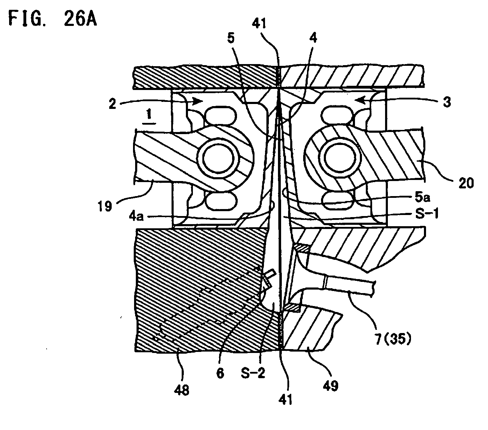

A distal end of the spark plug 6 is arranged on the center lower portion on one of the left and right enlarged portions 4c', 5c' and distal ends of the air intake and exhaust valves 7, 35 are arranged on the enlarged portions on the other of the left and right enlarged portions 4c' , 5c' . As shown in Fig. 4B, Fig. 4E, the capacity space S-2 (main combustion chamber) has a capacity larger than that of the joint space S-1 (sub combustion chamber). The same goes for modifications (Fig. 23A. Fig. 26A) described later.

The shape of the capacity space S-2 is formed in the above-mentioned manner. Particularly, in the present invention, to make the capacity space S-2 in the combustion chamber S as small as possible to satisfy demands for the enhancement of combustion efficiency, a high compression ratio and the like, left and right edge portions r1, r2 and center outer bottom portion r3 of the capacity space S-2 having an approximately flat shape projecting from the outer peripheral wall of the horizontal cylinder 1 are formed into a recessed curved shape and hence, the profile of the combustion chamber S can be also made as small as possible with the capacity space S-2.

The area of the opening portion S-4 which makes the joint space S-1 and the capacity space S-2 communicate with each other is set such that the opening portion S-4 does not become resistance to the intake and the exhaust of the mixed gas performed by the air intake valve 7 and the air exhaust valve 35.

Further, as shown in Fig. 4E' where a portion in Fig. 4E is shown in an enlarged manner, a clearance x between the left and right piston heads 4, 5 in a state that the left and right piston heads 4, 5 approach closest to each other is set such that the clearance x is narrower than a clearance y formed between the abutting surfaces of the left and right cylinder unit bodies 48, 49 which are joined by way of the gasket 41 described later as a seal constitutional member. Accordingly, it is possible to make the joint space S-1 of the combustion chamber S as small as possible.

As shown in Fig. 4A, in the capacity space S-2 of the combustion chamber S, the spark plug 6 is arranged on a left piston head 4 side, and the air intake valve 7 and the air exhaust valve 35 are arranged on a right piston head 5 side. That is, as shown in Fig. 4B and Fig. 4C, a plug mounting hole 6a for the spark plug 6 is provided outside the capacity space S-2 on a left piston head 4 side, and the spark plug 6 for igniting a mixed gas taken into the combustion chamber S can be mounted in the plug mounting hole 6a. Further, as shown in Fig. 4B and Fig. 4D, valve mounting holes 35a, 7a for the air intake valve 7 and the air exhaust valve 35 are provided outside the capacity space S-2 on a right piston head 5 side, and the air intake valve 7 and the air exhaust valve 35 can be mounted in the valve mounting holes 35a, 7a.

Further, with respect to the valve mounting hole 7a for the intake valve 7 and the valve mounting hole 35a for the exhaust valve 35, by taking into account the decrease of displacement due to a combustion loss of a mixed gas, a valve diameter of the valve mounting hole 35a for the air exhaust valve 35 is set smaller than a valve diameter of the valve mounting hole 7a for the air intake valve 7. Accordingly, as shown in Fig. 4C, the plug mounting hole 6a is formed in such a manner that the center 6b of the plug mounting hole 6a is offset to a valve mounting hole 35a side of the air exhaust valve 35 from the center Sa of the combustion chamber Sa by a predetermined width h (for example, only 1mm).

Still further, the spark plug 6 is mounted in the plug mounting hole 6a such that a center electrode 6c formed on a distal end of the spark plug 6 is set closer to the joint space S-1 side so that the outer electrode 6d formed on the distal end of the spark plug 6 does not interfere with a distal end of the air intake valve 7 and a distal end of the air exhaust valve 35 when the intake valve 7 and the exhaust valve 35 are lifted up.

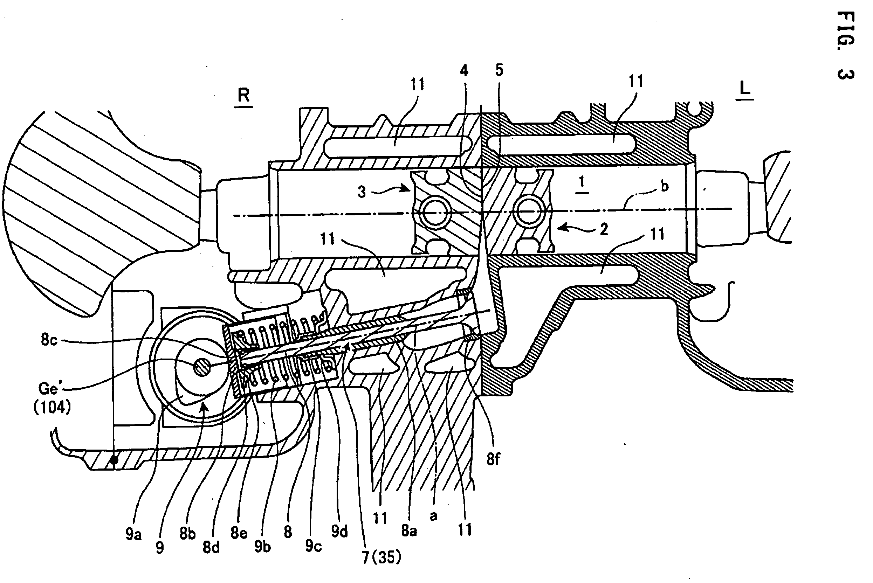

The air intake valve 7 introduces a mixed gas from a gas supply portion (not shown in the drawing) and allows the combustion chamber S to take in the mixed gas at a suitable timing. As shown in Fig. 3, the valve stem 8 of the air intake valve 7 is configured to be advanced and retracted by way of the stem drive mechanism 9, and performs an open and close operation of the air intake valve 7 along with the advancing and retracting operation. In the stem drive mechanism 9, an air intake cam 9a is arranged in a contactable manner with the valve lifter 8b formed on a proximal end of the valve stem 8, and a valve spring 9b is mounted on an operating portion of the valve stem 8. Accordingly, the valve stem 8 is allowed to advance from the valve seat 8f which is formed at a distal end of the valve stem 8 and faces the combustion chamber S due to the operation of the air intake cam 9a, and the valve stem 8 is allowed to retract due to the operation of the valve spring 9b and hence, a mixed gas is blown into the combustion chamber S by suction at a constant control timing. A valve operating axis a of the valve stem 8, that is, a valve operating axis of the air intake valve 7 is inclined relative to a horizontal axis b of the horizontal cylinder 1.

The valve stem 8 is held by a valve cotter 8d provided at a proximal end portion of the valve stem 8 and a valve guide 8a provided in a middle portion of the valve stem 8 in a state that the valve operating axis a of the valve stem 8 is inclined with respect to the horizontal axis b of the horizontal cylinder 1 at a predetermined angle.

The valve spring 9b is sandwiched between the valve retainer 8e and the spring seat 9d, and is arranged in an extensible and shrinkable manner between the valve retainer 8e and the spring seat 9d.

A stem seal 9c is mounted on a valve-spring-9b side of the valve guide 8a thus sealing a leakage of a mixed gas through the valve stem 8 to a valve spring 9b side.

A tappet adjusting shim 8c is arranged between a proximal end portion of the valve stem 8 and the valve lifter 8b so that a valve clearance of the air intake valve 7 is adjustable.

The air exhaust valve 35 has the substantially same constitution as the above-mentioned air intake valve 7, and is provided for discharging an exhaust gas in the inside of a combustion chamber S from an exhaust port 14 described later at a suitable timing.

As shown in Fig. 4, on a left piston 2 side of the capacity space S-2 which constitutes the combustion chamber S, a spark plug 6 for igniting a mixed gas is arranged. On a right piston 3 side of the capacity space S-2, the air intake valve 7 and the air exhaust valve 35 are arranged in a spaced-apart manner in the vertical direction in a state where the air intake valve 7 and the air exhaust valve 35 respectively face the spark plug 6 in an opposed manner. The air intake valve 7 is arranged above the spark plug 6, and the air exhaust valve 35 is arranged below the spark plug 6.

In this manner, the spark plug 6, the air intake valve 7 and the air exhaust valve 35 are arranged on left and right sides of the capacity space S-2 which constitutes the combustion chamber S respectively and, at the same time, the air intake valve 7 and the air exhaust valve 35 are arranged such that a valve operating axis a is inclined with respect to a horizontal cylinder. Due to such a constitution, the opposed-piston engine A can be formed in a compact manner. As a result, the capacity space S-2 of the combustion chamber S can be made as small as possible thus realizing a high compression ratio.

That is, one combustion chamber S is formed outside the horizontal cylinder 1 in a state where the combustion chamber S is communicated with the space defined between the left and right piston heads and hence, an S/V ratio can be decreased compared to a case where a plurality of combustion chambers are provided for respective pistons and, at the same time, a high compression ratio of a mixed gas can be acquired in the combustion chamber S. Here, according to the embodiment of the present invention, it is found out from data acquired by an experiment carried out by the inventors of the present invention that a compression ratio can be increased to an approximately 17, while a compression ratio of a mixed gas in a conventional engine is approximately 10 to 11.

Further, to explain one example of heat insulation materials for forming the opposed-piston engine A, well-known stainless steel (for example, SUS303) is used as a material for forming the left and right piston heads 4, 5, and well-known graphite iron casting (for example, FCD450) is used for forming the left cylinder unit body 48 and the right cylinder unit body 49 which form the horizontal cylinder 1 including the combustion chamber S. As described above, a low conductive material is used for forming the left and right piston heads 4, 5 and the horizontal cylinder 1, and two cylinders are joined together so as to form one combustion chamber S. Accordingly, heat insulation efficiency can be enhanced and the reduction of a cooling loss can be realized.

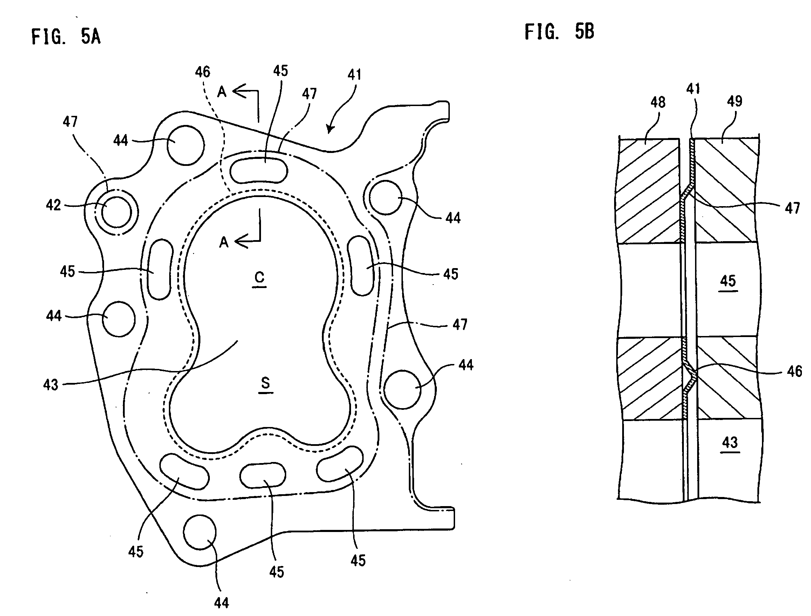

As shown in Fig. 1, a joint surface between the left and right cylinder unit bodies 48, 49 is sealed by a gasket 41 which constitutes a seal forming member and is formed by applying rubber coating to a sheet of SUS beat blade. As shown in Fig. 5A, in the gasket 41, a bore portion 43 which is formed embracing a cylinder bore hole C and the combustion chamber S, bolt holes 44, water hole portions 45 through which cooling water circulates, an oil hole portion 42 through which lubrication oil circulates and the like are formed. As such a gasket 41, for example, a metal-made cylinder head gasket which is used for cylinder sealing of a conventional 4-cycle engine and the like is used.

As shown in Fig. 5A, a full bead 46 is formed on the gasket 41 in a state where the full bead 46 surrounds the bore portion 43 along the bore portion 43. Further, a half bead 47 is formed on the outer periphery of the full bead 46 in a state where the half bead 47 surrounds the periphery of the water hole portion 45. A half bead 47 is also formed on the periphery of the oil hole portion 42 and the peripheries of two upper and lower bolt holes 44 formed in a right end portion of the gasket 41.

As shown in Fig. 5B, due to the full bead 4 6 which is formed on the periphery arranged very close to the bore portion 43 in a state where the full bead 46 surrounds the bore portion 43, when the left and right cylinder unit bodies 48, 49 are joined to each other by fastening using bolts which are inserted into the bolt holes 44 or the like, the periphery arranged very close to the bore portion 43 is sealed by bore sealing thus preventing a mixed gas taken into the inside of the combustion chamber S and an exhaust gas generated after combustion from being leaked through the joint surface between the left and right cylinder unit bodies 48, 49. Further, due to the half beads 47 which are formed on the peripheries of the plurality of water hole portions 45 which are formed on the outer periphery of the bore portion 43, the half bead which is formed on the periphery of the oil hole 42 which is arranged more outside of the bore portion 43, and the half beads which are formed on the peripheries of the plurality of bolt holes 44 which are formed in the peripheral end of the gasket 41, it is possible to prevent a leakage of water or oil which circulates in the periphery of the horizontal cylinder 1 for cooling the combustion chamber S through the joint surface between the left and right cylinder unit bodies 48, 49.

That is, the periphery very close to the bore portion 43 is sealed by the full bead 46 which has a crest shape in cross section for surely performing sealing of a gas. On the other hand, the sealing outside the sealing of the periphery of the bore portion 43 by the full bead 46, that is, the sealing of the peripheries of the water hole portions 45, the sealing of the periphery of the oil hole portion 42, the sealing of the periphery of the gasket 41 and the like are performed by the half bead 47 which has one side thereof inclined and is suitable for sealing a portion having a large radius of curvature and many curved portions can be easily sealed.

Fig. 5B is a cross-sectional view of an upper end portion of the bore portion 43 shown in Fig. 5A taken along a line A-A showing a mounting state of a gasket 41. Although the full bead 46 and the half beads 47 formed on the gasket 41 are well-known beads having the substantially same function as full beads and half beads formed on the above-mentioned conventional metal-made cylinder head gasket. However, by arranging the full bead 46 and the half beads 47 at particular positions as described above, it is possible to eliminate defects generated by sealing having a shape which has a high radius of curvature in the conventional sealing structure where a sealing member is fitted on a folded-back flange portion, and the above-mentioned structure can surely play a role of sealing function without generating wrinkles on the seal member on a curved portion.

In this manner, the combustion chamber S is thermally insulated by the heat insulation member and the sufficient sealing is performed and hence, the heat conduction can be lowered so that the heat insulation can be increased as much as possible whereby a cooling loss can be decreased and a high compression ratio can be acquired.

As shown in Fig. 1 and Fig. 3, with respect to the outer peripheral wall of the horizontal cylinder 1, a water jacket 11 having the duplicate structure is formed in the left and right cylinder unit bodies 48, 49 respectively. The water jacket 11 is configured to cool the engine while circulating cooling water in the water jacket 11. The cooling water inlets 12 and the cooling water outlets 13 of the water jacket 11 are arranged at particularly designed positions so as to efficiently enhancing the engine cooling efficiency.

That is, the cooling water inlets 12 are respectively independently arranged on left and right side portions of the water jacket 11, and two water jackets 11 which respectively correspond to the left and right cylinder unit bodies 48, 49 sides are provided to left and right side portions independently. In this manner, cooling water can be filled in the left half portion and the right half portion of the horizontal cylinder 1 from two cooling water inlets 12 respectively and hence, the cooling efficiency can be enhanced with the simple structure without designing a complicated jacket portion.

The cooling water outlet 13 is provided to a portion in the vicinity of the water jacket 11 portion which corresponds to the exhaust port 14 of one piston side (for example, right piston 3 side) of the left and right pistons 2, 3, and is configured to discharge cooling water which is heated by heat exchange from the water jacket 11 portion in the vicinity of the exhaust port 14 thus preventing undesired heat conduction and accelerating heat insulation.

A portion of the water jacket 11 may be formed into a shape such that the portion surrounds the periphery of the spark plug 6 and the peripheries of the air intake and exhaust valves 7, 35 so as to prevent heat transferred from the horizontal cylinder 1 and the combustion chamber S from affecting the spark plug 6 and the air intake and exhaust valves 7, 35 as much as possible (see Fig. 3). By providing such a constitution to the water jacket 11, particularly, even when heat of high temperature is directly propagated to the spark plug 6 and the air intake and exhaust valves 7, 35 from the combustion chamber S particularly, these parts can be cooled by the water jackets 11 around these members and hence, it is possible to prevent a defect in operation caused by the spark plug 6 and the air intake and exhaust valves 7, 35 due to a thermal trouble.

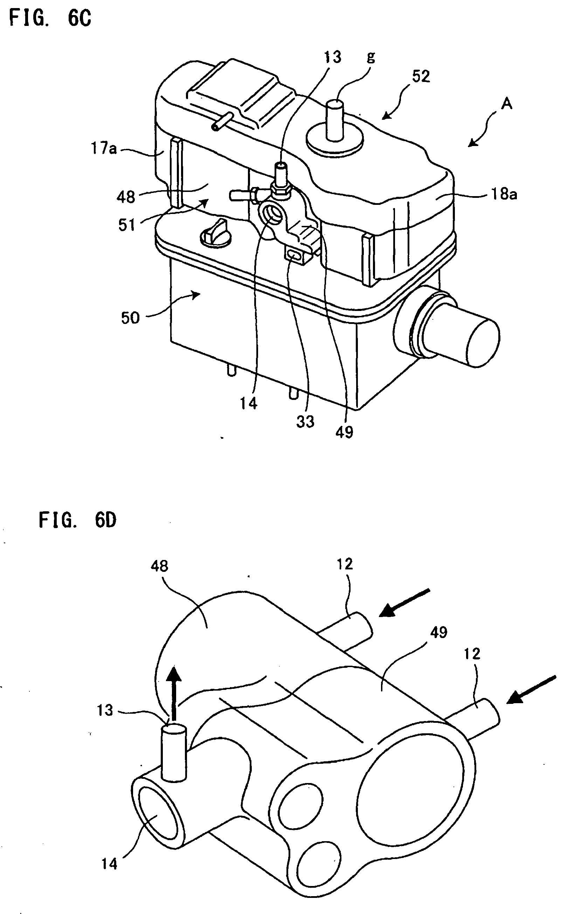

As shown in Fig. 6A, Fig. 6B and Fig. 6C, the opposed-piston engine A according to the embodiment of the present invention includes an engine block 51 as a body thereof, and a gear box 52 is arranged above the engine block 51, an oil pan 50 is arranged below the engine block 51. That is, the gear box 52 and the oil pan 50 are stacked on the engine block 51 in a state where the engine block 51 is sandwiched between the gear box 52 and the oil pan 50. The above-mentioned drive system of the opposed-piston engine a shown in Fig. 1 is housed in the inside of the engine block 51. Further, the group of interlocking gears G described later is housed in the gear box 52. Although described in detail later, the oil pan 50 supplies lubrication oil to the drive system in the engine block 51, the group of interlocking gears G in the gear box 52 and the like through an oil supply passage (hereinafter, referred to as lubrication circuit).

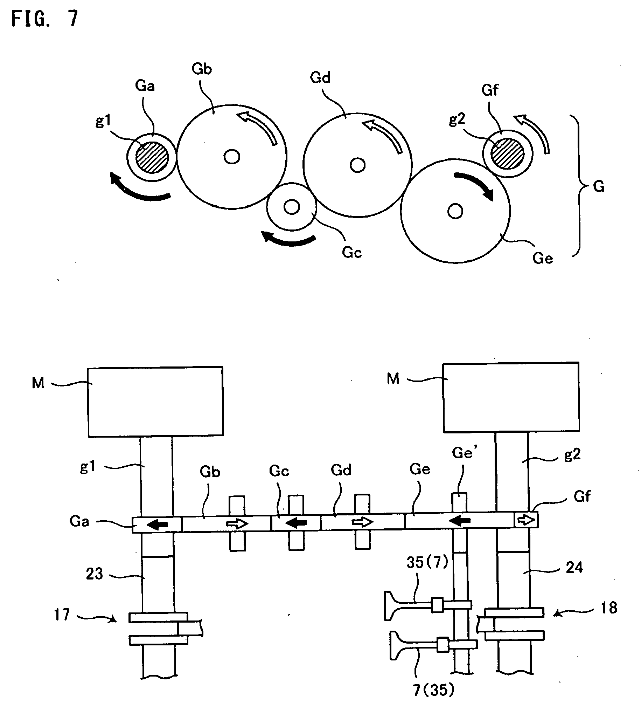

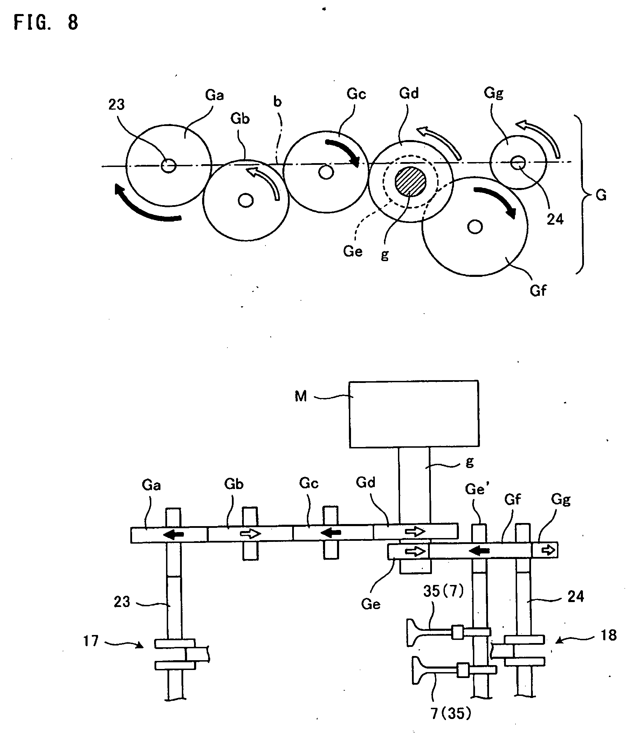

Fig. 6A and Fig. 6B show the constitution of the opposed-piston engine A where rotational outputs from the left and right crank output shafts 23, 24 of the engine block 51 are transmitted to two external actuators M (see Fig. 7) through two output shafts g1, g2 of the gear box 52. Fig. 6C shows the constitution of the opposed-piston engine A where rotational outputs from the left and right crank output shafts 23, 24 of the engine block 51 are converged to one output shaft g by the gear box 52 and a converged output is transmitted to an external actuator M (see Fig. 8).

As shown in Fig. 6A, on one side surface of the engine block 51, two cooling water inlets 12 which respectively correspond to the left and right cylinder unit bodies 48, 49 are provided. That is, as shown in Fig. 6D, cooling water is filled into the inside of the left and right cylinder unit bodies 48, 49 from the two cooling water inlets 12 which are respectively provided on one side surfaces of the left and right cylinder unit bodies 48, 49 of the engine block 51. Then, as described above, the filled cooling water is discharged to the outside of the engine block 51 from the cooling water outlet 13 provided to the other side surfaces of the left and right cylinder unit bodies 48, 49 through the water jacket 11 which is formed in a state where the water jacket 11 surrounds the outer peripheral wall of the horizontal cylinder 1.

As shown in Fig. 6B, the cooling water outlet 13 is arranged above an area in the vicinity of the exhaust port 14. As described above, by arranging the cooling water outlet 13 in the vicinity of the exhaust port 14, there is no possibility that cooling water which is filled in the inside of the engine block 51 is heated by undesired heat conduction from the exhaust port 14 and hence, the horizontal cylinder 1, the combustion chamber S, and the spark plug 6, the air intake valve 7 and the air exhaust valve 35 which are arranged around the combustion chamber S can be efficiently cooled.

As described above, the cooling water inlets 12 of the water jackets 11 are arranged such that the cooling water inlets 12 are independently arranged on the respective water jackets 11 corresponding to left and right piston 2, 3 sides, while the cooling water outlet 13 is arranged on the side portion of the water jacket 11 corresponding to the exhaust port 14 on the right piston 3 side. Accordingly, although it is necessary to enhance efficiency of cooling the spark plug 6, the air intake valve 7 and the air exhaust valve 35 provided to the combustion chamber S, due to such a constitution, it is possible to enhance efficiency of cooling the surrounding of these members thus enhancing thermal efficiency of the engine with the simple structure without additionally providing a complicated design to the water jacket structure.

Further, in the embodiment of the present invention, due to the above-mentioned arrangement of the water jacket 11, efficiency of cooling the members such as the spark plug 6, the air intake valve 7 and the air exhaust valve 35 provided to the combustion chamber S can be exclusively enhanced. Accordingly, there is no possibility of the generation of a heat loss which is generated when the combustion chamber S is cooled due to the cooling function of the water jacket 11 so that thermal efficiency is lowered.

As shown in Fig. 1, the left and right crank mechanisms 17, 18 are respectively connected in an interlocking manner to to the left and right pistons 2, 3 or to the bottom portions of the left and right pistons 2, 3. The left and right crank mechanisms 17, 18 are respectively constituted of left and right connecting rod 19, 20, and left and right crank arms 21, 22 having a cam function which are provided between the left and right connecting rods 19, 20 and the left and right crank output shafts 23, 24 respectively. Respective outputs from the left and right crank mechanisms 17, 18 are outputted to the outside through the left and right crank output shafts 23, 24.

The movement of the left piston 2 in the horizontal direction is transmitted to the left crank mechanism 17 through the left connecting rod 19. Here, the left crank mechanism 17 converts the movement of the left connecting rod 19 in the lateral direction into the rightward rotation (rotation in the clockwise direction), for example. Due to such an operation, a rotational output of rightward rotation (rotation in the clockwise direction) can be obtained from the left crank output shaft 23. On the other hand, the movement of the right piston 3 in the horizontal direction is transmitted to the right crank mechanism 18 through the right connecting rod 20. Here, the right crank mechanism 18 converts the movement of the right connecting rod 20 in the lateral direction into the leftward rotation (rotation in the counterclockwise direction), for example. Due to such an operation, a rotational output of leftward rotation (rotation in the counterclockwise direction) can be obtained from the right crank output shaft 24.

As described above, the left and right crank mechanisms 17, 18 are respectively connected to the bottom portions of the left and right pistons 2, 3 in an interlocking manner, outputs from the left and right pistons 2, 3 are taken out from the left and right crank output shafts 23, 24 in the left and right crank mechanisms 17, 18 by way of two shafts, and two shafts are rotated in the directions opposite to each other respectively. Due to such a constitution, when rotational outputs from the left and right crank output shafts 23, 24 are changed so that excess or deficiency of rotation is generated, a rotational torque is changed and a reaction force is generated in various modes. However, even when any kind of reaction force is generated, a reaction force on a right side and a reaction force on a left side are always generated in the same mode and hence, these reaction forces cancel each other.

The outer sides of the left and right crank mechanisms 17, 18 are respectively covered with left and right crank covers 17a, 18a which are respectively connected to left and right engine blocks 51-1, 51-2 in a state where the left and right crank covers 17a, 18a close the opening end portions of the left and right engine blocks 51-1, 51-2.

Examples of the constitution of the group of interlocking gears G which is housed in the gear box 52 are explained by reference to Fig. 7 to Fig. 12. The group of interlocking gears G according to the embodiment of the present invention is provided for performing a control or a phase synchronizing control which suppresses the fluctuation of torques of rotational outputs from the left and right crank output shafts 23, 24 by external actuators M thus lowering vibrations of the engine in driving the external actuators M.

The phase synchronizing control of rotational outputs from the left and right crank output shafts 23, 24 is performed such that rotational outputs from the left and right crank output shafts 23, 24 are set in left and right opposite rotational directions, and the rotational outputs from the left and right crank output shafts 23, 24 are interlockingly connected to each other by synchronizing or changing the phases (rotational directions and change speeds) of the rotational outputs by way of an idle gear, a timing belt and the like. By performing such a phase synchronizing control, forces of inertia or torques which the left and right crank mechanisms 17, 18 respectively have can be set such that the forces of inertia or the torques cancel each other. Accordingly, it is possible to acquire an advantageous effect that vibrations of the engine can be lowered thus decreasing operation noises.

The method of lowering vibrations of the engine or decreasing operation noises is not limited to the phase synchronizing control and, for example, phases may be arbitrarily adjusted or phases may be displaced. Further, the control of rotational outputs from the left and right crank output shafts 23, 24 may be performed by phase controls of various modes.

The group of interlocking gears G shown in Fig. 7 is configured such that rotational outputs from the left and right crank output shafts 23, 24 in the left and right crank mechanisms 17, 18 are taken out by way of two shafts, that is, output shafts g1, g2, and power generators or the like which constitute the external actuators M are configured to be driven by the respective output shafts g1, g2 independently. As described above, when the plurality of (two) independent external actuators M are interlockingly connected to each other by way of two shafts, a control or the phase synchronizing control of suppressing the fluctuation of a torque from the engine by the external actuators M can be performed thus acquiring an advantageous effect that the engine becomes compact and vibrations of the engine can be lowered.

The left and right crank output shafts 23, 24 respectively constitute the output shafts g1, g2 and hence, a peak torque can be decreased whereby it is possible to realize part the constitution which requires no members for enhancing the strength of the parts or a dampening mechanism. Further, as the external actuator M, twin power generators may be simultaneously driven or a power generator and a compressor or the like may be simultaneously driven.

As shown in Fig. 7, the group of interlocking gears G is interposed between upper portions of the left and right crank mechanisms 17, 18. The left and right crank output shafts 23, 24 in the left and right crank mechanisms 17, 18 are connected to a predetermined gear Ga and a predetermined gear Gf in the group of interlocking gears G respectively in an interlocking manner so that the group of interlocking gears G is driven. The group of interlocking gears G is constituted of a set of six gears consisting of the gear Ga, a gear Gb, a gear Gc, a gear Gd, a gear Ge, and the gear Gf.

The gear Ga is connected to the left crank output shaft 23 by way of the output shaft g1, and constitutes a drive power gear which transmits a rotational output of rightward rotation (rotation in the clockwise direction) of the left crank output shaft 23 to the gear Gb. A gear ratio between the gear Ga and the gear Gb is set to 1 : 2. The gear Gf is connected to the right crank output shaft 24, and constitutes a drive power gear which transmits a rotational output of leftward rotation (rotation in the counterclockwise direction) of the right crank output shaft 24 to the gear Ge. A gear ratio between the gear Gf and the gear Ge is set to 1 : 2. Further, the gear Gb, the gear Gc, the gear Gd and the gear Ge are idle gears. A gear ratio between the gear Gb and the gear Gc is set to 2 : 1. A gear ratio between the gear Gc and the gear Gd is set to 1 : 2. A gear ratio between the gear Gd and the gear Ge is 1 : 1.

Since the gear ratio between the gear Ga and the gear Gb is set to 1 : 2, a rotational output of rightward rotation (rotation in the clockwise direction) of the gear Ga is transmitted to the gear Gb after being halved. Here, the gear Gb is rotated by leftward rotation (rotation in the counterclockwise direction) opposite to the rotational direction of the gear Ga. In this manner, the rotational output of the gear Ga which is connected to the left crank output shaft 23 is transmitted to the gear Gf while changing the rotational direction and the rotational speed thereof through plurality of other gears (gear Gb→gear Gc→gear Gd→gear Ge).

In the same manner as described above, a rotational output of the gear Gf which is connected to the right crank output shaft 24 is transmitted to the gear Ga while changing the rotational direction and the rotational speed thereof through plurality of other gears (gear Ge→gear Gd→gear Gc→gear Gb).

In this manner, the left and right crank output shafts 23, 24 on both ends are configured to be rotated in the directions opposite to each other through the group of interlocking gears G interposed between the left and right crank output shafts 23, 24 and hence, it is possible to realize the counter rotation where the crank output shafts 23, 24 are rotated in the directions opposite to each other whereby rotational reaction forces from the left and right crank output shafts 23, 24 cancel each other thus lowering vibrations of the engine. Further, both two shafts can be connected simultaneously in an interlocking manner with power generators or compressors which constitute the external actuators M and hence, outputs from the left and right crank output shafts 23, 24 can be effectively used.

As shown in Fig. 7, a shaft Ge' of the gear Ge is connected to the stem drive mechanism 9 of the air intake valve 7 and the air exhaust valve 35 by way of a cam. When the rotation of the gear Ge is transmitted to the stem drive mechanism 9 through the cam, as described above, the air intake valve 7 and the air exhaust valve 35 perform opening and closing operation along with the advancing and retracting operation by way of the stem drive mechanism 9. Due to such an operation, a mixed gas can be taken into the inside of the combustion chamber S at a predetermined timing, and an exhaust gas in the inside of the combustion chamber S can be discharged at a predetermined timing.

As another example, as shown in Fig. 8, rotational outputs of the left and right crank output shafts 23, 24 in the left and right crank mechanisms 17, 18 are respectively connected to predetermined gears in a group of interlocking gears G in an interlocking manner thus driving the group of interlocking gears G. Further, the group of interlocking gears G may be also configured such that an output shaft g which functions as a gear for outputting is provided to one gear Gd out of the predetermined gears, and rotational outputs from the left and right crank output shafts 23, 24 are outputted after converged to the output shaft g through the group of interlocking gears G.

As shown in Fig. 8, the group of interlocking gears G is constituted of a set of seven gears consisting of a gear Ga, a gear Gb, a gear Gc, the gear Gd, a gear Ge, a gear Gf, and a gear Gg. The gear Ga is connected to the left crank output shaft 23 and constitutes a drive gear which transmits driving of the left crank mechanism 17 to the group of interlocking gears G. The gear Gb and the gear Gc are idle gears which transmit driving of the gear Ga to the gear Gd, and a gear ratio among the gear Ga, the gear Gb, the gear Gc, and the gear Gd is set to 1 : 1. Further, a rotational output of the gear Ga connected to the left crank output shaft 23 is transmitted to the gear Gd while changing the rotational direction thereof by way of plurality of other idle gears (gear Gb → gear Gc → gear Gd), and is outputted from the output shaft g.

The gear Gg is connected to the right crank output shaft 24, and constitutes a drive gear which transmits driving of the right crank mechanism 18 to the group of interlocking gears G. The gear Gf is an idle gear which transmits driving of the gear Gg to the gear Ge, and a gear ratio between the gear Gg and the gear Gf is set to 1 : 2, and a gear ratio between the gear Gf and the gear Ge is set to 2 : 1. A rotational output of the gear Gg connected to the right crank output shaft 24 is transmitted to the gear Ga by way of other gears (gear Gf → gear Ge) while changing the rotational direction and a rotational speed thereof, and is outputted from the output shaft g.

A shaft Ge' of the gear Gf is connected to the stem drive mechanism 9 for driving the air intake valve 7 and the air exhaust valve 35, and a mixed gas is taken into the inside of the combustion chamber S at a predetermined timing, and an exhaust gas in the inside of the combustion chamber S is discharged at a predetermined timing.

In this manner, as shown in Fig. 8, the output shaft g is arranged in an offset manner from the center between the opposedly-facing left and right pistons 2, 3, that is, the horizontal axis b which is a center line of the horizontal cylinder 1, and rotational outputs of the left and right crank output shafts 23, 24 in the left and right crank mechanisms 17, 18 arranged at both ends of the engine are set in a variable manner in left and right opposite rotational directions whereby the counter rotation where the left and right crank output shafts 23, 24 are rotated in the directions opposite to each other is realized by the group of interlocking gears G. Accordingly, the rotational outputs can be transmitted to the output shaft g which constitutes a gear for outputting in a state where forces of inertia and torques from the left and right crank mechanisms 17, 18 are cancelled each other and hence, vibrations of the engine can be lowered thus giving rise to an advantageous effect that operation noises can be decreased. Further, the output shaft g for the group of interlocking gears G is arranged in an offset manner from the horizontal axis b of the horizontal cylinder 1 and hence, it is possible to acquire an advantageous effect that even when the group of interlocking gears G (for example, the output shaft, the crank main shaft, the air intake-and-exhaust-valve operating cam shaft and the like) is provided at one side of the engine, the group of interlocking gears G can be realized with the compact constitution.

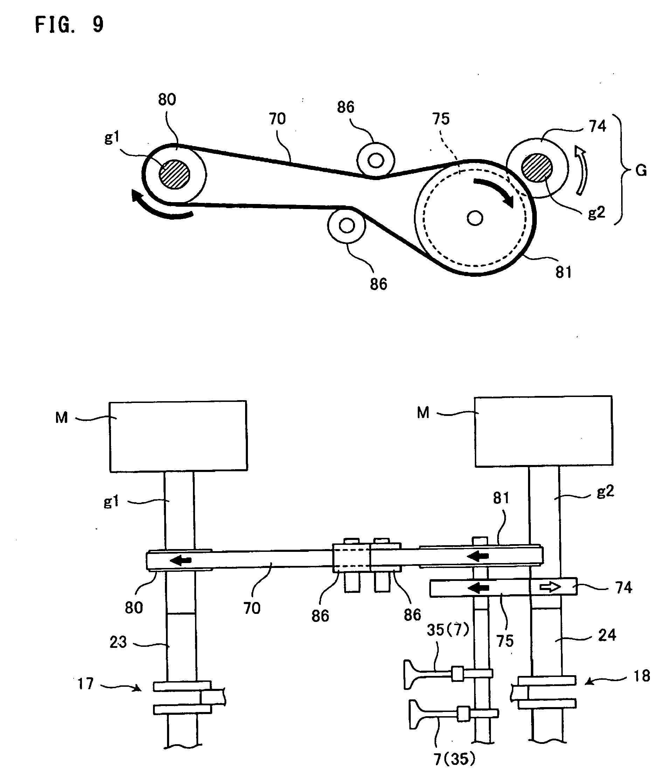

Further, as another embodiment, as shown in Fig. 9, rotational outputs of the left and right crank output shafts 23, 24 in the left and right crank mechanisms 17, 18 are taken out by way of two shafts, that is, output shafts g1, g2, and power generators or the like which constitute external actuators M are configured to be driven by the respective shafts independently, and rotational outputs of the left and right crank output shafts 23 , 24 in the left and right crank mechanisms 17, 18 can be taken out to the outside by connecting a timing belt 70 and a plurality of predetermined gears in an interlocking manner.

As shown in Fig. 9, interlocking gears G is interposed between upper portions of the left and right crank mechanisms 17, 18 in a state where the timing belt 70 is incorporated into the group of interlocking gears G as a part of the group of interlocking gears G. That is, with the gear 74 which is connected to the right crank output shaft 24, a large-diameter gear 75 which is arranged adjacent to a gear 74 is meshed by way of the output shaft g2. A timing belt pulley 81 is coaxially mounted on the gear 75. On the other hand, a timing belt pulley 80 which is connected to the left crank output shaft 23 by way of the output shaft g1 is provided, the timing belt 70 is extended between the timing belt pulley 80 and the timing belt pulley 81 on a right crank output shaft 24 side.

A gear ratio between the gear 74 and the gear 75 is set to 1 : 2, and a rotational output of the gear 74 which is connected to the right crank output shaft 24 is transmitted to the timing belt pulley 80 by way of the gear 75 and the timing belt pulley 81 which is arranged above the gear 75 while changing the rotational direction and a rotational speed thereof. Further, at the approximately center position between the timing belt pulley 80 and the timing belt pulley 81, two tension rollers 86 for keeping a predetermined tension (tensile force) of the timing belt 70 are provided.

In this manner, rotational outputs of the left and right crank output shafts 23, 24 at both ends of the engine are configured to be rotated in the directions opposite to each other, and are connected to each other by the gear 75 and the timing belt 70 thus realizing the counter rotation where the left and right crank output shafts 23, 24 are rotated in the directions opposite to each other. Accordingly, it is possible to make rotational reaction forces from left and right crank output shafts 23, 24 cancel each other thus lowering vibrations of the engine.

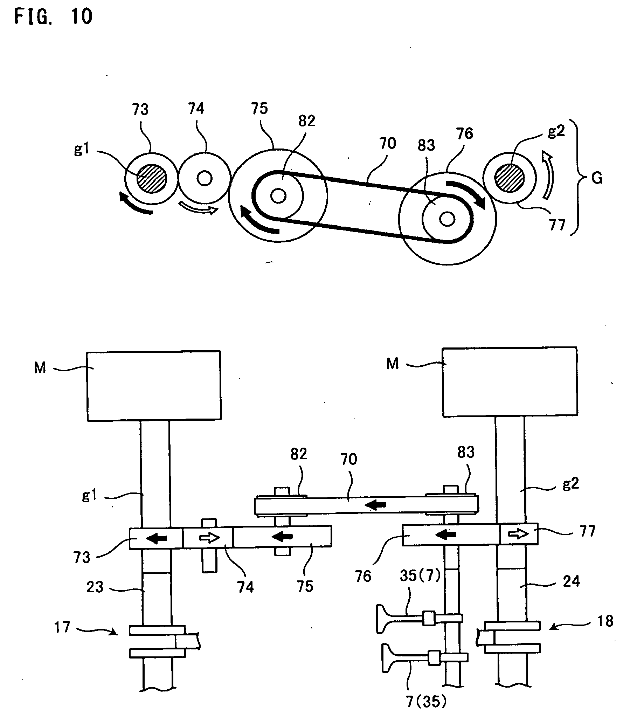

As another embodiment, as shown in Fig. 10, rotational outputs of the left and right crank output shafts 23, 24 in the left and right crank mechanisms 17, 18 are taken out by way of two shafts, that is, the output shafts g1, g2, and the power generators or the like which constitute the external actuators M are configured to be driven by the respective shafts independently, and also the rotational outputs of the left and right crank output shafts 23, 24 are connected to each other in an interlocking manner by a timing belt 70 and a plurality of predetermined gears.

As shown in Fig. 10, a group of interlocking gears G is interposed between upper portions of the left and right crank mechanisms 17, 18 in a state where the timing belt 70 is incorporated into the group of interlocking gears G as a part of the group of interlocking gears G. That is, a large-diameter gear 76 which is arranged adjacent to a gear 77 is meshed with a gear 77 which is connected to the right crank output shaft 24 by way of an output shaft g2, and a timing belt pulley 83 is coaxially mounted on the gear 76. On the other hand, an intermediate gear 74 is meshed with a gear 73 which is connected to the left crank output shaft 23 by way of an output shaft g1. A large-diameter gear 75 which is arranged adjacent to the intermediate gear 74 is meshed with the intermediate gear 74. A timing belt pulley 82 is coaxially mounted on the gear 75. The timing belt 70 is extended between the timing belt pulley 83 on a right crank output shaft 24 side and the timing belt pulley 82 on a left crank output shaft 23 side. Here, a gear ratio between the gear 73 and the gear 74 is set to 1 : 1, a gear ratio between the gear 77 and the gear 76 is set to 1 : 2, a gear ratio between the gear 74 and the gear 75 is set to 1 : 2, and a gear ratio between the gear 75 and the gear 76 is set to 1 : 1.

As described above, the rotational outputs of the left and right crank output shafts 23, 24 at both ends of the engine are configured to be rotated in the directions opposite to each other, and are connected to each other by the plurality of gears and the timing belt 70 thus realizing the counter rotation where the left and right crank output shafts 23, 24 are rotated in the directions opposite to each other. Accordingly, it is possible to make rotational reaction forces from left and right crank output shafts 23, 24 cancel each other thus lowering vibrations of the engine.

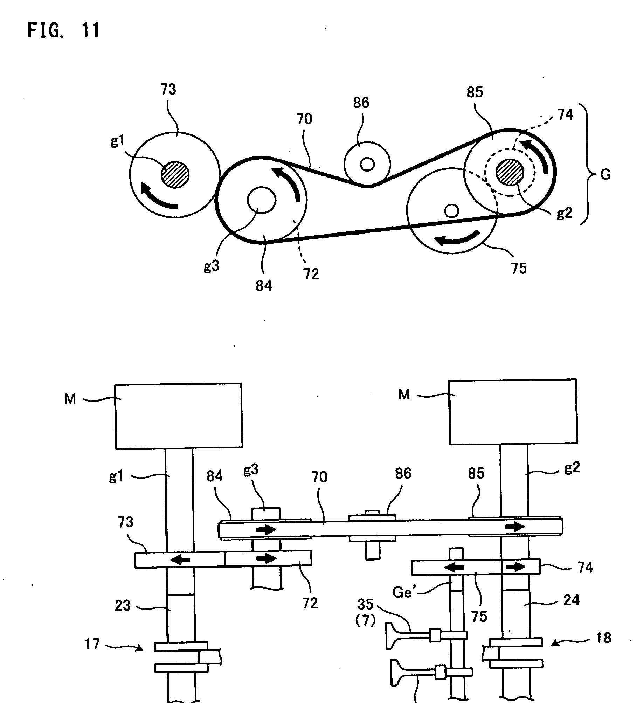

As another embodiment, as shown in Fig. 11, rotational outputs of the left and right crank output shafts 23, 24 in the left and right crank mechanisms 17, 18 may be taken out by way of two shafts, that is, output shafts g1, g2, power generators or the like which constitute external actuators M may be configured to be driven by the respective output shafts g1, g2 independently, and also the rotational outputs of the left and right crank output shafts 23, 24 are connected to each other in an interlocking manner by a timing belt 70 and a plurality of predetermined gears.

As shown in Fig. 11, a group of interlocking gears G is interposed between upper portions of the left and right crank mechanisms 17, 18 in a state where the timing belt 70 is incorporated into the group of interlocking gears G as a part of the group of interlocking gears G. That is, with a gear 73 which is connected to the left crank output shaft 23 by way of the output shaft g1, a gear 72 which is arranged adjacent to the gear 73 is meshed. A timing belt pulley 84 is provided to an idler shaft g3 which is arranged coaxially with the gear 72. On the other hand, to a gear 74 which is connected to the right crank output shaft 24 by way of the output shaft g2, a timing belt pulley 85 is coaxially provided, and the timing belt 70 is extended between the respective timing belt pulleys 84, 85.

In Fig. 11, symbol 86 indicates a tension roller, and symbol 75 indicates a gear for operating the air intake and exhaust valves 7, 35 which are meshed with the gear 74 on a right crank output shaft 24 side. As shown in Fig. 11, a shaft Ge' of the gear 75 is connected to a stem drive mechanism 9 of the air intake and exhaust valves 7, 35 in an interlocking manner by way of a cam.

As described above, the rotational outputs of the left and right crank output shafts 23, 24 at both ends of the engine are configured to be rotated in the directions opposite to each other, and are connected to each other by the plurality of gears and the timing belt 70 thus realizing the counter rotation where the left and right crank output shafts 23, 24 are rotated in the directions opposite to each other. Accordingly, it is possible to make rotational reaction forces from left and right crank output shafts 23, 24 cancel each other thus lowering vibrations of the engine.

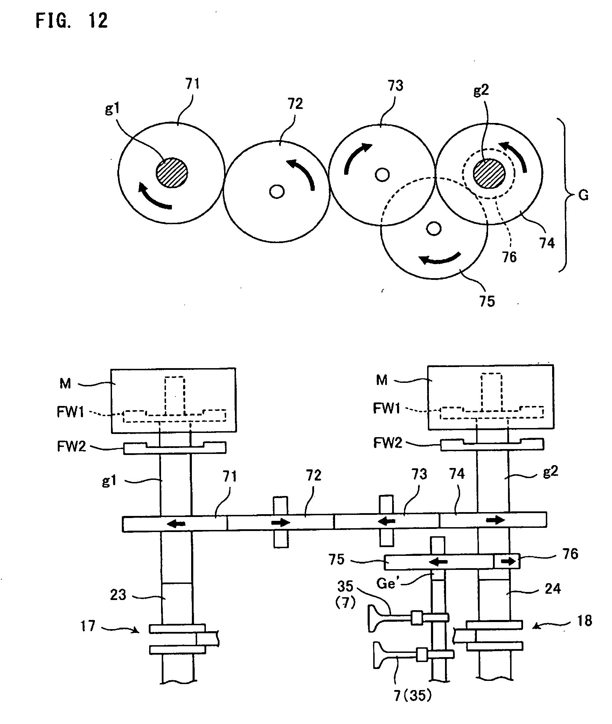

As another embodiment, as shown in Fig. 12, rotational outputs of the left and right crank output shafts 23, 24 in the left and right crank mechanisms 17, 18 are taken out by way of two shafts, that is, output shafts g1, g2, power generators or the like which constitute external actuators M are configured to be driven by the respective output shafts g1, g2 independently, and also the rotational outputs of the left and right crank output shafts 23, 24 are connected to each other in an interlocking manner by a plurality of predetermined gears.

As shown in Fig. 12, a group of interlocking gears G is interposed between upper portions of the left and right crank mechanisms 17, 18. That is, a gear 71 and a gear 74 are respectively mounted on the output shafts g1, g2 which are respectively connected to the left and right crank output shafts 23, 24. Further, two interlocking gears 72, 73 are arranged between the respective gears 71, 74 in a state where the interlocking gear 72 is meshed with the gear 71 and the interlocking gear 73, and the interlocking gear 73 is meshed with the interlocking gear 72 and the gear 74 thus interlockingly connecting the output shafts g1, g2 each other by making all gears of the group of interlocking gears G mesh with each other.

In Fig. 12, symbol 75 indicates a gear for operating the air intake and exhaust valves 7, 35 which is meshed with a gear 76 mounted on a right crank output shaft 24 side. As shown in Fig. 12, a shaft Ge' of the gear 75 is connected to a stem drive mechanism 9 of the air intake and exhaust valves 7, 35 by way of a cam in an interlocking manner.

As described above, the rotational outputs of the left and right crank output shafts 23, 24 at both ends of the engine are configured to be rotated in the directions opposite to each other, and are connected to each other by the plurality of gears thus realizing the counter rotation where the left and right crank output shafts 23, 24 are rotated in the directions opposite to each other. Accordingly, it is possible to make rotational reaction forces from left and right crank output shafts 23, 24 cancel each other thus lowering vibrations of the engine.

As shown in Fig. 12, when necessary, by mounting flywheels FW2, FW2 having the same diameter and the same weight on the output shafts g1, g2 and by mounting flywheel FW1, FW1 having the same diameter and the same weight also on the external actuators M, M which are respectively connected to the output shafts g1, g2. Accordingly, a rotational balance between two shafts, that is, between the output shafts g1, g2 can be made uniform thus realizing the compact flywheel while maintaining a function of the flywheels.

In the above-mentioned embodiments, the explanation is made with respect to the constitution where rotational outputs from the left and right crank output shafts 23, 24 in the left and right crank mechanisms 17, 18 are directly taken out by directly connecting the rotational outputs to the gears arranged on both ends of the group of interlocking gears G and the timing belt pulley. However, by providing left and right neighboring shafts (not shown in the drawing) which are respectively arranged adjacent to the left and right crank output shafts 23, 24, rotational outputs from the left and right crank output shafts 23, 24 may be taken out from the left and right neighboring shafts.

In the embodiments of the present invention, the exhaust port 14 and the intake port 33 which are communicated with the capacity space S-2 of the combustion chamber S particularly are respectively arranged on the upper portion and the lower portion of the engine block 51 in a separated manner. That is, as shown in Fig. 6B, by arranging the exhaust port 14 on the upper portion of the engine block 51, the exhaust port 14 can be positioned on a side of a part having a high temperature such as a heat exchanger. Accordingly, it is possible to prevent exhaust heat from the exhaust port 14 from influencing the high-temperature parts. On the other hand, by arranging the intake port on the lower portion of the engine case which is a relatively low-temperature part, a balance between the heat distribution of the engine case and the arrangement positions of the air intake and exhaust ports can be improved and hence, the intake port can take in air of a lower temperature into the combustion chamber whereby efficiency of charging a mixed gas made of fuel and air into the combustion chamber can be enhanced. Accordingly, an output of the engine can be enhanced thus giving rise to an advantageous effect that the engine becomes compact and thermal efficiency can be enhanced.

As described above, the opposed-piston engine A of the embodiment of the present invention includes the engine block 51 as a body thereof, and the gear box 52 is arranged above the engine block 51 and the oil pan 50 is arranged below the engine block 51. That is, the gear box 52 and the oil pan 50 are stacked on the engine block 51 in a state where the engine block 51 is sandwiched between the gear box 52 and the oil pan 50 (see Fig. 6). The oil pan 50 supplies lubrication oil to the drive system in the engine block 51, the group of interlocking gears G in the gear box 52 and the like through the lubrication circuit.

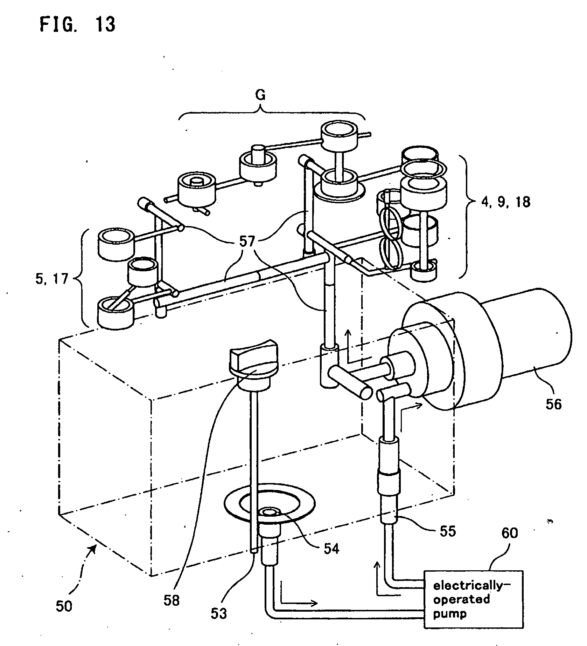

The schematic constitution of the lubrication circuit is explained by reference to Fig. 13. A predetermined amount of lubrication oil is accumulated in the inside of the oil pan 50. An electrically-operated pump 60 which is arranged outside the oil pan 50 is connected to the oil pan 50. When the electrically-operated pump 60 is operated, the electrically-operated pump 60 takes out lubrication oil through an oil suction port 54 formed on a bottom surface of the oil pan 50, and supplies lubrication oil from an oil discharge port 55 to an oil filter 56 mounted on one of short side surfaces of the oil pan 50. The oil filter 56 also has a function of a water-cooled oil cooler, removes impurities from lubrication oil and, at the same time, and lowers a temperature of lubrication oil which is elevated due to the use in the drive system in the engine block 51 and the group of interlocking gears G in the gear box 52 to a predetermined temperature.

Lubrication oil discharged from the oil filter 56 is supplied to the drive system in the engine block 51 through the circulation passage 57 and is used for lubrication. As the drive system in the engine block 51 of the opposed-piston engine A, the left and right piston heads 4, 5 in the horizontal cylinder 1, the stem drive mechanism 9 (including the air intake cam 9a), the left and right crank mechanisms 17, 18, the valve lifter mechanism for the air intake valve 7 and the air exhaust valve 35 and the like can be named. Lubrication oil supplied to the horizontal cylinder 1 may be supplied to inner surfaces (slide surfaces of the left and right piston heads 4, 5) of the horizontal cylinder from a wall surface of the horizontal cylinder 1 after passing through the circulation passage 57, or lubrication oil supplied to the left and right crank mechanisms 17, 18 may be supplied to the inner surface of the horizontal cylinder 1 through the left and right connecting rods 19, 20.

Further, lubrication oil in the circulation passage 57 is also supplied to the group of interlocking gears G in the gear box 52 and is used for lubrication of the gears. The group of interlocking gears G is constituted of the above-mentioned drive gears, idle gears, output shafts, timing belt pulleys, tension rollers and the like. Further, lubrication oil which is used in the drive system in the engine block 51 and the group of interlocking gears G in the gear box 52 is recovered into the inside of the oil pan 50 which is arranged on the lower portion of the engine block 51 in an overlapping manner. The recovered lubrication oil is supplied to the circulation passage 57 after passing through the oil filter 56 by the electrically-operated pump 60 again and is supplied to the above-mentioned respective drive systems which require lubrication oil.

A predetermined amount of lubrication oil is consumed and hence, an oil level gauge 53 through which an amount of lubrication oil accumulated in the oil pan 50 can be checked from the outside is mounted on the oil pan 50. When an accumulated amount of lubrication oil accumulated in the inside of the oil pan 50 becomes a predetermined amount or below, the oil pan 50 is replenished with lubrication oil necessary for covering a shortage from the supply port 58.

### [Second embodiment]

Next, the second embodiment of the present invention is explained in detail by reference to Fig. 19A, Fig. 19B, Fig. 21, and Fig. 22. Here, parts which are in common with the parts of the above-mentioned first embodiment are given the same symbols, and the repeated explanation of these parts is suitably omitted, and the explanation is made only with respect to the different constitutions.

As shown in Fig. 19B, in an opposed-piston engine B according to the second embodiment, the positional relationship between the intake port 33 and the exhaust port 14 of the opposed-piston engine A according to this embodiment is reversed from the positional relationship between the intake port 33 and the exhaust port 14 of the opposed-piston engine A according to first embodiment. Accordingly, the opposed-piston engine B according to the second embodiment has the constitution different from the constitution of the opposed-piston engine A of the first embodiment due to such difference in positional relationship.

In the above-mentioned first embodiment, as shown in Fig. 6A and Fig. 6B, the intake port 33 is arranged on the lower portion of the engine block 51, and the exhaust port 14 is arranged on the upper portion of the engine block 51. Such structure can also acquire the advantageous effects described above. In the case where such a structure is adopted, however, it is thought that, when the engine is stopped, a condensate is generated in the inside of the exhaust pipe in the process where the exhaust pipe which becomes a high temperature (not shown in the drawing) returns to a room temperature, and the condensate eventually enters the inside of the combustion chamber S by moving down the exhaust pipe thus giving rise to a drawback that a so-called water hammer phenomenon occurs at the time of starting of the engine next. The water hammer phenomenon is a phenomenon where non-compressible water which enters the inside of the combustion chamber is subjected to liquid compression by the left and right pistons 2, 3 and hence, the movement of the left and right pistons 2, 3 and the like which reciprocate at a high speed is suddenly stopped so that a force of inertia having nowhere to go causes the deformation of the left and right connecting rods 19, 20, a breakage of other constitutional parts or the like.

Accordingly, as a method of preventing the generation of such a water hammer phenomenon, as shown in Fig. 19B, there is provided the method where the positional relationship between the intake port 33 and the exhaust port 14 according to the first embodiment is reversed in this embodiment. Due to such a constitution, there is no possibility that water condensed in the inside of the exhaust pipe enters the inside of the combustion chamber S above the exhaust port 14 and hence, it is possible to prevent the occurrence of a water hammer phenomenon.

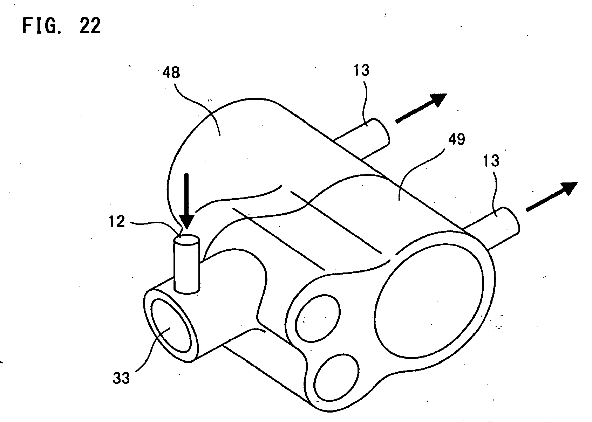

Further, when the cooling water inlets 12 and the cooling water outlet 13 of the above-mentioned water jacket 11 are in the same manner as the first embodiment, a temperature of air taken into the combustion chamber through the intake port 33 arranged in the vicinity of the cooling water outlet 13 is elevated due to the influence exerted by the heat conduction of cooling water heated by a heat exchange with cooling water discharged from the cooling water outlet 13. In view of the above, in this embodiment, as shown in Fig. 22, Fig. 19A and Fig. 19B, the positional relationship between the cooling water inlets 12 and the cooling water outlet 13 is also reversed from that of the first embodiment.

Due to such a constitution, the cooling water outlet 13 is formed on side surfaces of the left and right cylinder unit bodies 48, 49 on the other side where the intake port 33 is formed and hence, there is no possibility that air taken into the combustion chamber through the intake port 33 is influenced by heat conduction of cooling water heated by heat exchange.

Even when the positional relationship between the cooling water inlet 12 and the cooling water outlet 13 in this embodiment is reversed from that of the above-mentioned first embodiment, this embodiment and the first embodiment are structurally equal and hence, the advantageous effects of this embodiment brought about by the structure are equal to those of the first embodiment brought about by the structure.

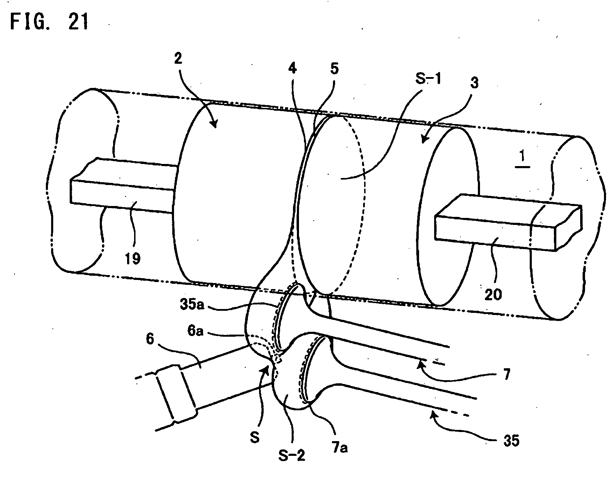

By arranging the intake port 33 on an upper portion of the engine block 51, as shown in Fig. 21, the positional relationship between the air intake valve 7 and the air exhaust valve 35 in the combustion chamber S is also reversed.

Due to such a constitution, a passage for an exhaust gas discharged from the air exhaust valve 35 to the exhaust port 14 arranged on a lower portion of the engine block 51 can be made shortest.

Even when the positional relationship between the air intake valve 7 and the air exhaust valve 35 is reversed from that of the above-mentioned first embodiment, this embodiment and the first embodiment are structurally equal and hence, advantageous effects of this embodiment brought about by the structure is equal to those of the first embodiment brought about by the structure.

Modification of the above-mentioned first and second embodiments are explained. In the explanation made hereinafter, the explanation is made only with respect to points which make the modifications differ from the above-mentioned first and second embodiments, and other constitutional parts are given the same symbols and the repeated explanation of these parts is omitted.

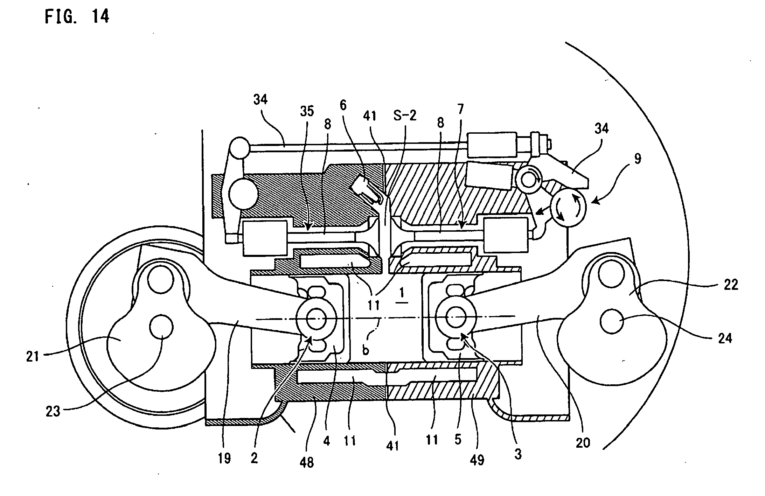

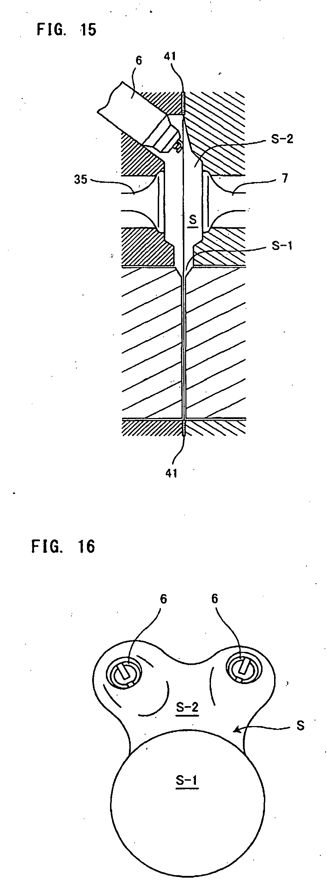

Firstly, the modification of arrangement positions of the air intake valve 7 and the air exhaust valve 35 in the capacity space S-2 of the combustion chamber S is explained by reference to Fig. 14 and Fig. 15. As shown in Fig. 14 and Fig. 15, in the capacity space S-2 which constitutes the combustion chamber S bulging sideward from the horizontal cylinder 1 in a flat shape, the air intake valve 7 and the air exhaust valve 35 are arranged to face each other in an opposed manner, and the valve stems 8 of the respective valves 7, 35 are arranged parallel to the horizontal axis b of the horizontal cylinder 1. Accordingly, by arranging the respective valves 7, 35 to face each other in an opposed manner, the respective valves are brought into a head-to-head state and hence, the same space can be used in common as the valve operation occupying spaces of the respective valves at the time of operating the respective valves and hence, the capacity space S-2 which constitutes the combustion chamber S can be made as small as possible thus increasing a compression ratio of a mixed gas in the combustion chamber S.

Also in this modification, the air intake valve 7 and the air exhaust valve 35 are constituted in an extensible and retractable manner by way of the stem drive mechanism 9. However, as shown in Fig. 14, the air intake valve 7 and the air exhaust valve 35 are arranged to face each other in an opposed manner, and proximal ends of stems of the air intake valve 7 and the air exhaust valve 35 are interlockingly connected to the stem drive mechanism 9 thus providing a timing-difference interlocking mechanism where when one of respective valves 7, 35 is opened, the other valve is closed. In Fig. 14, symbol 34 indicates a push rod which is interlockingly connected to a proximal portion of the stem of the air exhaust valve 35 for opening and closing the air exhaust valve 35 by way of a link mechanism, and symbol 34' indicates a push part which is interlockingly connected to a proximal portion of the stem of the air intake valve 7 for opening and closing the air intake valve 7 by way of a link mechanism. Timings of opening and closing the air intake valve 7 and the air exhaust valve 35 are adjusted by respectively operating the push rod 34 and the push part 34' due to a cam action of the stem drive mechanism 9.

Next, a modification relating to the number of the spark plugs 6 provided to the capacity space S-2 of the combustion chamber S is explained by reference to Fig. 16. In this modification, different from the above-mentioned embodiments, two spark plugs are provided to the capacity space S-2 of the combustion chamber S on a left piston 2 side. By adopting the structure where two spark plugs 6 are provided, an ignition of a mixed gas in the capacity space S-2 of the combustion chamber S can be efficiently performed.

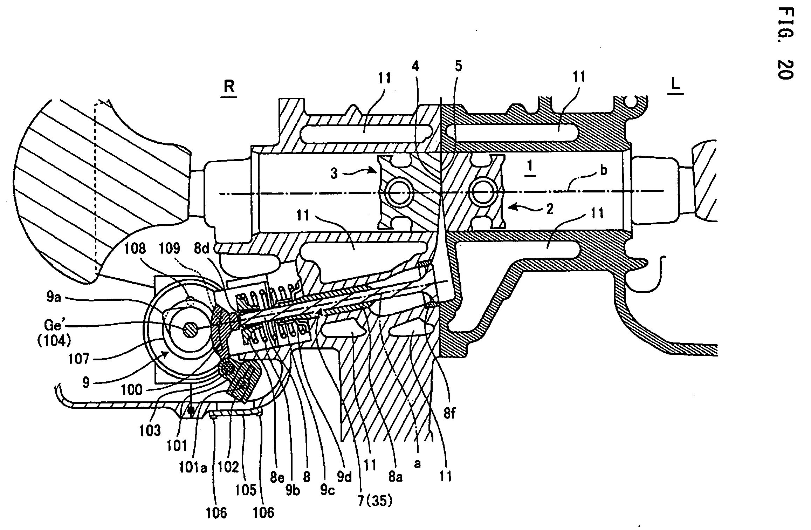

Next, a modification relating to a mechanism for adjusting a valve clearance and a mechanism for releasing a pressure in the combustion chamber S is explained by reference to Fig. 19B and Fig. 20. In the above-mentioned first and second embodiments, as shown in Fig. 3, it is possible to adjust a valve clearance of the air intake and exhaust valves 7, 35 adjustable by providing a tappet adjusting shims 8c having different thicknesses. On the other hand, in this modification, as shown in fig. 20, a rocker arm 100 is provided for performing a role of the tappet adjusting shims 8 in place of the tappet adjusting shim 8c. The rocker arm 100 is brought into contact with an end portion of the valve stem 8 and, at the same time, is interlockingly connected to an adjusting screw 101 by way of a connecting portion 103 of an eccentric shaft coaxial with the valve stem 8. A body of the adjusting screw 101 is displaced around the connecting portion 103 by displacing an adjusting portion 101a of the adjusting screw 101 frontward and backward, and the rocker arm 100 is displaced in an extensible and retractable manner in the direction of the valve operation axis "a" by way of the connecting portion 103 corresponding to the displacement of the adjusting screw 101. To be more specific, by inserting a tool for adjustment, for example, a flathead screwdriver through a tool inserting hole 102 formed in the adjusting screw 101 and by rotating the adjusting portion 101a having a recessed portion with which a distal end of the flathead screwdriver is engageable leftward or rightward by a predetermined amount corresponding to a desired adjustment amount, a valve clearance can be adjusted. In driving the opposed-piston engines A, B, a cam 9a is brought into contact with the locker arm 100 due to the rotation of a cam shaft 104 (Ge') so that the valve stem 8 is pushed whereby the air intake and exhaust valves 7, 35 can be opened and closed.

After the valve clearance adjustment of the air intake and exhaust valves 7, 35 is finished, the air intake and exhaust valves 7, 35 are fixed using a lock nut (not shown in the drawing) or the like at predetermined positions in the vicinity of the tool inserting hole 102 of the adjusting screw 101 thus preventing the adjusted valve clearance from being changed.

Due to the above-mentioned constitution, the valve clearance can be adjusted without using the tappet adjusting shims 8c.

Further, on an outer peripheral wall of the opposed-piston engine A, B, an opening portion is formed in the vicinity of the stem drive mechanism 9, and an adjusting lid 105 shown in Fig. 19B and Fig. 20 can be formed. Accordingly, by opening the adjusting lid 105 by removing four bolts 106, the stem drive mechanism 9 and the surrounding of the stem drive mechanism 9 in the inside of the opposed-piston engines A, B are exposed and hence, it is possible to manipulate the adjusting portion 101a of the adjusting screw 101. Due to such a constitution, the valve clearances of the air intake and exhaust valves 7, 35 are adjustable from the outside without disassembling the opposed-piston engines A, B thus largely enhancing the operability.

Further, as shown in Fig. 20, with respect to the air exhaust valve 35, a decompression (pressure releasing) mechanism 107 can be arranged at a predetermined position of the cam shaft 104 for enhancing startability of the engine. The decompression mechanism 107 is provided for preventing the occurrence of a phenomenon that a pressure in the inside of the horizontal cylinder 1 is increased due to a compression stroke of the left and right pistons 2, 3 at the time of starting the opposed-piston engines A, B so that a load is applied to the starter (not shown in the drawing) thus causing a starting failure.

The decompression mechanism 107 is coaxially mounted on and fixed to the cam shaft 104, and a decompression cam 108 is arranged in a projectable manner from an outer diameter of the decompression mechanism 107. The decompression cam 108 is configured such that the decompression cam 108 projects from the decompression mechanism 107 when the opposed-piston engines A, B are stopped, and is pulled into the decompression mechanism 107 due to a centrifugal force when the opposed-piston engines A, B are driven and the cam shaft 104 is rotated. The decompression cam 108 projected from the decompression mechanism 107 is arranged so as to be brought into contact with a columnar rocker arm pin 109 formed on a side surface of the rocker arm 100 in a projecting manner.

Accordingly, immediately after the opposed-piston engines A, B are started, the decompression cam 108 is brought into a state immediately before a centrifugal force acts on the decompression mechanism 107. Accordingly, the decompression cam 108 is brought into contact with the rocker arm pin 109 so that rocker arm 100 pushes the valve stem 8 toward the combustion chamber 8 and hence, the air exhaust valve 35 can be opened. Thereafter, the decompression cam 108 is pulled into the inside of the decompression mechanism 107 due to a centrifugal force generated by the rotation of the cam shaft 104 and hence, there is no possibility that the decompression cam 108 is brought into contact with other constitutional members.

Due to the above-mentioned constitution, when the opposed-piston engines A, B are started, in the compression stroke of the left and right pistons 2, 3, a pressure in the horizontal cylinder 1 can be released in advance and hence, there is no possibility that a load is applied to the starter whereby the favorable startability can be ensured.

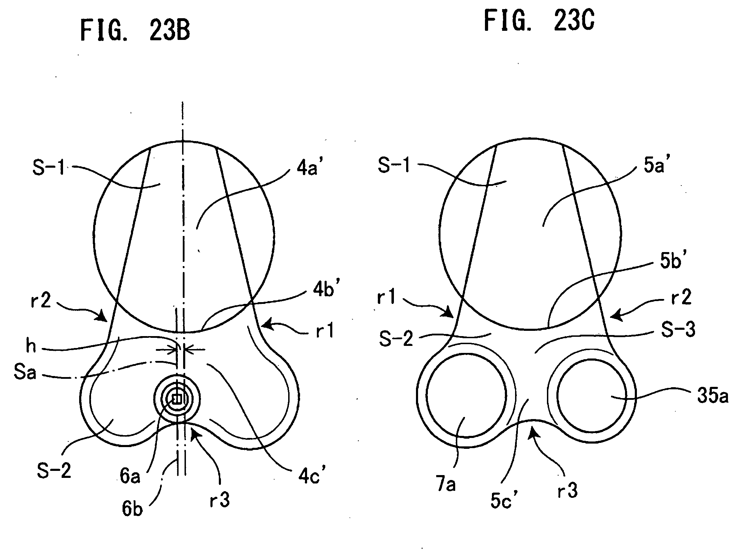

Next, a modification relating to the shapes of end surfaces of the left and right piston heads 4, 5 in the joint space S-1 of the combustion chamber S is explained by reference to Fig. 23A, Fig. 23B, and Fig. 23C. In the combustion chamber S, in a state where the left and right piston heads 4, 5 approach close to each other, flat recessed portions 4a', 5a' having an approximately normal trapezoidal shape which are communicated with the outside of the end surfaces of the left and right piston heads are formed from a lower edge portion to a position above a center portion on the end surfaces of both piston heads, and a space defined by the flat recessed portions 4a' , 5a' in a state where both piston heads approach close to each other is set as a joint space S-1.

That is, shapes of the flat recessed portions 4a', 5a' according to this modification are formed of an approximately normal trapezoidal shape where the lower edge portions of the end surfaces of the left and right piston heads 4, 5 constitute the upper base, and inclined surfaces 4a, 5a which are respectively formed on the end surfaces of the left and right piston heads 4, 5 are continuously formed to a gasket 41 side of the horizontal cylinder 1.

The joint space S-1 is communicated with the capacity space S-2 which is formed outside the body of the horizontal cylinder 1 by bulging a side wall of a center portion of the horizontal cylinder 1 in an approximately flat shape along the cross-sectional direction of the horizontal cylinder 1.

Due to the above-mentioned constitution, a pressure generated by explosion by ignition in the capacity space S-2 is made to pass through the inside of the joint space S-1 having the inclined surfaces 4a, 5a which are continuously formed toward the horizontal cylinder 1 without causing an abnormal change in pressure and, at the same time, a pressure can be concentrated in the vicinity of the center of the end surfaces of the left and right piston heads 4, 5. That is, it is possible to realize the smooth propagation of pressure thus realizing the piston operation with favorable thermal efficiency.

Accordingly, a reaction force which is directed in the direction extremely close to the direction of the horizontal axis "b" of the horizontal cylinder 1 which is substantially equal to the axes of the left and right pistons 4 , 5 can be applied to the left and right pistons 4, 5 and hence, vibrations of the engine can be further reduced compared to the above-mentioned embodiments whereby combustion efficiency can be enhanced thus improving thermal efficiency.

According to the modification of the present invention, it is found out from data acquired by an experiment carried out by the inventors of the present invention that a compression ratio can be increased to an approximately 14, while a compression ratio of a mixed gas in a conventional engine is approximately 10 to 11.

In Fig. 23B and Fig. 23C, the shapes, constitutions and the like of the capacity space S-2 and a combustion space S-3 are described based on the above-mentioned second embodiment. However, these factors are not directly related to the explanation of this modification.

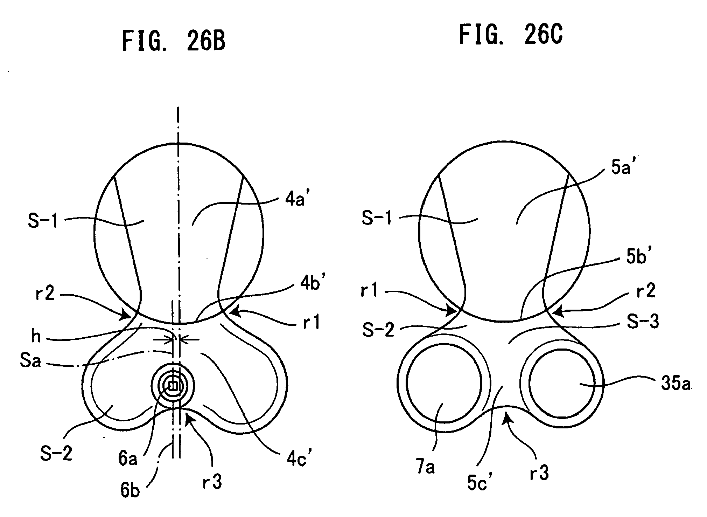

Further, a modification relating to the shapes of end surfaces of the left and right piston heads 4, 5 in the joint space S-1 of the combustion chamber S is explained by reference to Fig. 26A, Fig. 26B, and Fig. 26C. In the combustion chamber S, in a state where the left and right piston heads 4, 5 approach close to each other, flat recessed portions 4a' , 5a' having an approximately normal trapezoidal shape which are communicated with the outside of the end surfaces of the left and right piston heads are formed from a lower edge portion to a position above a center portion on the end surfaces of both piston heads, and a space defined by the flat recessed portions 4a' , 5a' in a state where both piston heads approach close to each other is set as a joint space S-1.

That is, shapes of the flat recessed portions 4a', 5a' according to this modification are formed of an approximately inversely trapezoidal shape where the lower edge portions of the end surfaces of the left and right piston heads 4, 5 constitute the lower base, and inclined surfaces 4a, 5a which are respectively formed on the end surfaces of the left and right piston heads 4, 5 are continuously formed to a gasket 41 side of the horizontal cylinder 1.

The joint space S-1 is communicated with the capacity space S-2 which is formed outside the body of the horizontal cylinder 1 by bulging a side wall of a center portion of the horizontal cylinder 1 in an approximately flat shape along the cross-sectional direction of the horizontal cylinder 1.

Due to the above-mentioned constitution, a pressure generated by explosion by ignition in the capacity space S-2 is made to pass in a spreading manner through the inside of the joint space S-1 having the inclined surfaces 4a, 5a which are continuously formed toward the horizontal cylinder 1 without causing an abnormal change in pressure and, at the same time, a pressure can be concentrated in the vicinity of the center of the end surfaces of the left and right piston heads 4, 5. That is, it is possible to realize the smooth propagation of pressure thus realizing the piston operation with favorable thermal efficiency.

Accordingly, a reaction force which is directed in the direction extremely close to the direction of the horizontal axis "b" of the horizontal cylinder 1 which is substantially equal to the axes of the left and right pistons 4, 5 can be applied to the left and right pistons 4, 5 and hence, vibrations of the engine can be further reduced whereby combustion efficiency can be enhanced thus improving thermal efficiency.

In Fig. 26B and Fig. 26C, the shapes, constitutions and the like of the capacity space S-2 and a combustion space S-3 are described based on the above-mentioned second embodiment. However, these factors are not directly related to the explanation of this modification.

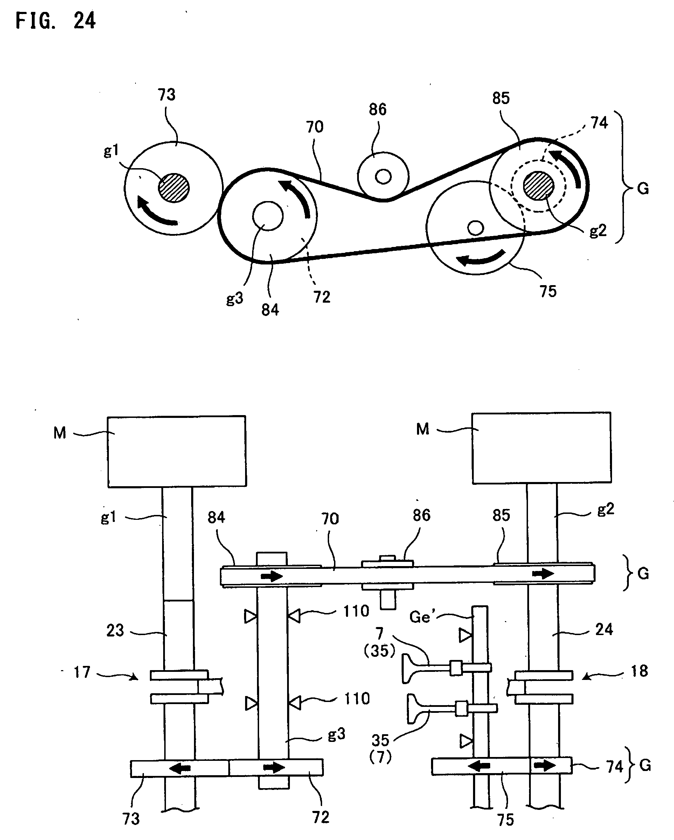

Next, a modification of the group of interlocking gears G according to the above-mentioned embodiment shown in Fig. 11. is explained by reference to Fig. 24. A timing belt 70 is arranged on upper portions of left and right crank mechanisms 17, 18, and the group of interlocking gears G which are interlockingly connected to each other by way of the timing belt 70 are arranged on lower portions of the left and right crank mechanisms 17, 18. That is, out of the group of interlocking gears G according to the above-mentioned embodiment shown in Fig. 11, the timing belt 70 is left above the left and right crank mechanisms 17, 18, and the group of interlocking gears G except for the timing belt 70 are moved below the left and right crank mechanisms 17, 18. Accordingly, in the same manner as the above-mentioned embodiment, it is possible to realize the counter rotation and hence, rotational reaction forces from the left and right crank output shafts 23, 24 cancel each other thus lowering vibrations of the engine.

Fig. 19A, 19B are views showing an example where this modification is applied to the opposed-piston engine B according to the second embodiment.

Since the group of interlocking gears G is not concentrated on the upper portions of the left and right crank mechanisms 17, 18, there is no possibility that respective gear output shafts g1, g2 are elongated upward. Accordingly, it is possible to prevent a breakage of the respective gear output shafts g1, g2 caused by an abnormal moment or a stress due to eccentricity, and it is also possible to prevent the generation of vibrations due to such an abnormal moment or a stress. Further, it is unnecessary to provide a support member (not shown in the drawing) to middle portions of the gear output shafts g1, g2 for preventing the generation of eccentricity.

Further, a distance between the timing belt pulley 84 and the gear 72 is large and hence, a support member 110 can be provided to a middle portion of a coaxial idler shaft g3. Accordingly, a breakage of the idler shaft g3 caused by an abnormal moment or a stress due to eccentricity brought about by a biasing force of the timing belt 70 or the generation of vibrations due to such an abnormal moment or a stress can be prevented.

Further, in the case such as the above-mentioned second embodiment shown in Fig. 19A and Fig. 19B where the intake port 33 is arranged on the upper portion and the exhaust port 14 is arranged on the lower portion, even when the gears G except for the timing belt 70 are arranged below the opposed-piston engine B which becomes a high temperature, the gears are formed of a metal-made material which has an excellent thermal resistance and the like and hence, the gears is not influenced by heat. Accordingly, by arranging the timing belt 70 formed using a resin as a main material above the opposed-piston engine B whose temperature is at an approximately room temperature, it is possible to prevent the timing belt 70 from being deteriorated thus prolonging the lifetime of the timing belt 70.

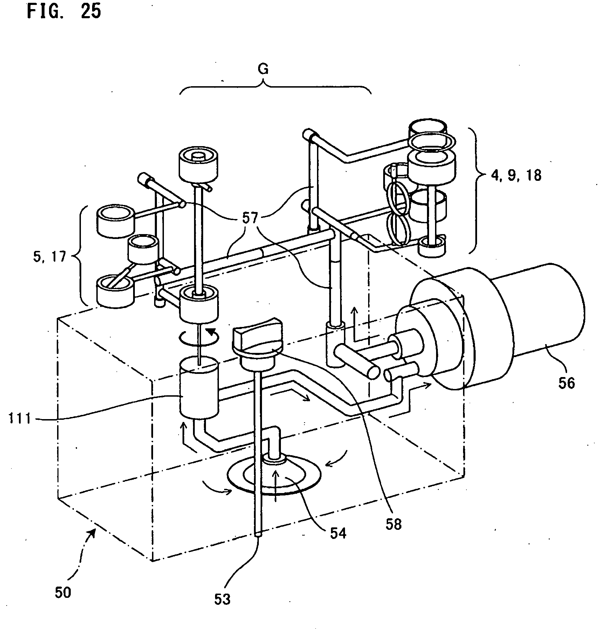

Next, a modification of the lubrication circuit is explained by reference to Fig. 25. In the modification, a mechanical pump 111 is used in place of the electrically-operated pump 60 shown in the above-mentioned embodiment shown in Fig. 13, and the idler shaft g3 and the mechanical pump 111 are operated in an interlocking manner. As the mechanical pump 111, a pump suitable for oil circulation such as a trochoid pump can be suitably used. Here, the member which is operated in an interlocking manner with the mechanical pump 111 is not limited to the idler shaft g3, and other shafts can be suitably used.

In this modification, the idler shaft g3 which is operated in an interlocking manner with the group of interlocking gears G which is driven by the starter (not shown in the drawing) operates the mechanical pump 111 so as to take out lubrication oil from the oil suction port 54 formed in a bottom surface of the oil pan 50. The method of circulating oil which is performed thereafter is substantially equal to the oil circulating method adopted by the above-mentioned embodiments. Fig. 25 shows a circulation passage 57 according to the above-mentioned modification shown in Fig. 27.

Due to such a constitution, it is possible to supply lubrication oil to required portions of the whole opposed-piston engines A, B by circulation without necessitating the supply of electricity to the pump from the outside.

### Reference Signs List

- A:: opposed-piston engine according to first embodiment
- B:: opposed-piston engine according to second embodiment
- 1:: horizontal cylinder
- 2:: left piston
- 3:: right piston
- 4:: left piston head
- 5:: right piston head
- S:: combustion chamber
- S-1:: joint space
- S-2:: capacity space
- S-3:: combustion space
- 6:: spark plug
- 7:: air intake valve
- 8:: valve stem
- 9:: stem drive mechanism
- A:: valve operating axis
- B:: horizontal axis
- 11:: water jacket
- 12:: cooling water inlet
- 13:: cooling water outlet
- 14:: exhaust port
- 17:: left crank mechanism
- 18:: right crank mechanism
- 19:: left connecting rod
- 20:: right connecting rod
- 21:: left crank arm
- 22:: right crank arm
- 23:: left crank output shaft
- 24:: right crank output shaft
- 33:: intake port
- 35:: air exhaust valve
- 41:: gasket
- 50:: oil pan
- 51:: engine block
- 52:: gear box
- G:: group of interlocking gears
- Ga:: gear
- Gb:: gear
- Gc:: gear
- Gd:: gear
- Ge:: gear
- Gf:: gear
- Gg:: gear
- g:: gear output shaft
- g1:: gear output shaft
- g2:: gear output shaft
- M:: external actuator

## Claims

1. An opposed-piston engine (A, B) where left and right piston heads (4, 5) are arranged to face each other in the inside of a cylinder (1) formed by joining left and right engine blocks to each other, the opposed-piston engine (A, B) comprising:
a joint space (S-1) which is formed by flat recessed portions (4a', 5a') formed on end surfaces of both piston heads (4, 5); the opposed-piston engine (A, B) being **characterized by** comprising:
a capacity space (S-2) formed by bulging in an approximately flat shape in the direction orthogonal to the axial direction of the cylinder outside a side wall of a center portion of the cylinder (1) in the circumferential direction;
air intake and exhaust valves (7, 35) which are arranged on one side of the capacity space (S-2); and
a spark plug (6) which is arranged on the other side of the capacity space (S-2), wherein
the joint space (S-1) and the capacity space (S-2) are communicated with each other.

2. The opposed-piston engine (A, B) according to claim 1, wherein the capacity space (S-2) is constituted of: a semicircular arcuate recessed portion which is communicated with the joint space (S-1); left and right enlarged portions (4c', 5c') which are formed in a semicircular arcuate shape toward left and right sides from the semicircular arcuate recessed portion; and a combustion space which (S-3) gradually increases a thickness thereof toward the left and right enlarged portions (4c', 5c') from the semicircular arcuate recessed portion.

3. The opposed-piston engine (A, B) according to claim 2, wherein the air intake and exhaust valves (7, 35) are arranged in the left and right enlarged portions (4c', 5c'), and a spark plug (6) is arranged on a lower portion of a center portion between the left and right enlarged portions (4c', 5c').

4. The opposed-piston engine (A, B) according to any one of claims 1 to 3, wherein the flat recessed portion (4a', 5a') has an approximately parabolic shape.

5. The opposed-piston engine (A, B) according to any one of claims 1 to 3, wherein the flat recessed portion (4a', 5a') has an approximately normal or inversely trapezoidal shape.

6. The opposed-piston engine (A) according to any one of claims 1 to 5, wherein a water jacket (11) is formed in an outer periphery of the horizontal cylinder (1), cooling water inlets (12) for the water jacket (11) are respectively independently arranged on left and right side portions of the water jacket (11) corresponding to left and right piston sides, and a cooling water outlet (13) is arranged on a portion of the water jacket (11) corresponding to an exhaust port on one piston side.

7. The opposed-piston engine (B) according to any one of claims 1 to 5, wherein a water jacket (11) is formed in an outer periphery of the horizontal cylinder (1), cooling water outlets (13) for the water jacket are respectively independently arranged on left and right side portions of the water jacket (11) corresponding to left and right piston sides, and a cooling water inlet (12) is arranged on a portion of the water jacket (11) corresponding to a suction port on one piston side.

## Patentansprüche

1. Gegenkolbenmotor (A, B), bei dem linker und rechter Kolbenkopf (4, 5) so angeordnet sind, dass sie im Inneren eines Zylinders (1), das durch miteinander verbinden von linken und rechten Motorblöcken ausgebildet ist, sich zugewandt gegenüberliegen, wobei der Gegenkolbenmotor (A, B) umfasst:
einen Verbindungsraum (S-1), der durch ebene Vertiefungsbereiche (4a', 5a'), die an Stirnflächen der beiden Kolbenköpfe (4, 5) gebildet sind, ausgebildet ist, wobei der Gegenkolbenmotor (A, B) **dadurch gekennzeichnet ist, dass** er umfasst:
einen Kapazitätsraum (S-2), der durch Ausbauchen einer annähernd ebenen Form in orthogonaler Richtung zur axialen Richtung des Zylinders (1), außerhalb einer Seitenwand eines Mittelabschnitts des Zylinders (1), in Umfangsrichtung ausgebildet ist,
Ansaug- und Auslassventile (7, 35), die auf einer Seite des Kapazitätsraums (S-2) angeordnet sind, und
eine Zündkerze (6), die auf der anderen Seite des Kapazitätsraums (S-2) angeordnet ist, wobei
der Verbindungsbereich (S-1) und der Kapazitätsraum (S-2) miteinander verbunden sind.

2. Gegenkolbenmotor (A, B) nach Anspruch 1, wobei der Kapazitätsraum (S-2) aufgebaut ist aus: einem halbkreisförmig, bogenförmig, ausgesparten Bereich, der mit dem Verbindungsbereich (S-1) in Verbindung steht, links und rechts vergrößerten Bereichen (4c', 5c'), die in einer halbkreisförmigen Bogenform in Richtung linke und rechte Seite des halbkreisförmig, bogenförmig, ausgesparten Bereich ausgebildet sind, und einem Verbrennungsraum (S-3), dessen Dicke sich in Richtung der linken und rechten, vergrößerten Bereiche (4c', 5c'), des halbkreisförmig, bogenförmig, ausgesparten Bereichs graduell vergrößert.

3. Gegenkolbenmotor (A, B) nach Anspruch 2, wobei die Ansaug- und Auslassventile (7, 35) in den linken und rechten, vergrößerten Bereichen (4c', 5c') angeordnet sind, und eine Zündkerze (6) auf einem unteren Bereich eines Mittelabschnitts zwischen den linken und rechten, vergrößerten Bereichen (4c', 5c') angeordnet ist.

4. Gegenkolbenmotor (A, B) nach einem der Ansprüche 1 bis 3, wobei der flach ausgesparte Bereich (4a', 5a') eine annähernd parabolische Form aufweist.

5. Gegenkolbenmotor (A, B) nach einem der Ansprüche 1 bis 3, wobei der flach ausgesparte Bereich (4a', 5a') eine in etwa normal oder umgekehrt trapezförmige Form aufweist.

6. Gegenkolbenmotor (A) nach einem der Ansprüche 1 bis 5, wobei ein Wassermantel (11) in einem Außenumfang des horizontalen Zylinders (1) ausgebildet ist, Kühlwasser-Einlässe (12) für den Wassermantel (11) sind jeweils unabhängig an linkem und rechtem Seitenbereich des Wassermantels (11) angeordnet, wobei sie linker und rechter Kolbenseite entsprechen, und ein Kühlwasserauslass (13) ist an einem Bereich des Wassermantels (11) angeordnet, der einem Auslassbereich auf einer Kolbenseite entspricht.

7. Gegenkolbenmotor (B) nach einem der Ansprüche 1 bis 5, wobei ein Wassermantel (11) in einem Außenumfang des horizontalen Zylinders (1) ausgebildet ist, Kühlwasser-Auslässe (13) für den Wassermantel (11) sind jeweils unabhängig an linkem und rechtem Seitenbereich des Wassermantels (11) angeordnet, wobei sie linker und rechter Kolbenseite entsprechen, und ein Kühlwassereinlass (12) ist an einem Bereich des Wassermantels (11) angeordnet, der einem Ansaugbereich auf einer Kolbenseite entspricht.

## Revendications

1. Moteur à pistons opposés (A, B), dans lequel des têtes de piston gauche et droit (4, 5) sont agencées pour se faire face à l'intérieur d'un cylindre (1) formé par jonction mutuelle de blocs moteur gauche et droit , le moteur à pistons opposés (A, B) comprenant :
un espace d'assemblage (S-1) qui est formé par des parties évidées plates (4a', 5a') formées sur les surfaces d'extrémité des deux têtes de piston (4, 5) ;
le moteur à pistons opposés (A, B) étant **caractérisé en ce qu'**il comprend :
un espace de capacité (S-2) formé par évasement sous une forme approximativement plate dans la direction orthogonale à la direction axiale du cylindre en dehors d'une paroi latérale d'une partie centrale du cylindre (1) dans la direction circonférentielle ;
des soupapes d'entrée et de sortie d'air (7, 35) qui sont agencées sur un côté de l'espace de capacité (S-2) ; et
une bougie d'allumage (6) qui est agencée sur l'autre côté de l'espace de capacité (S-2), dans lequel :
l'espace d'assemblage (S-1) et l'espace de capacité (S-2) communiquent l'un avec l'autre.

2. Moteur à pistons opposés (A, B) selon la revendication 1, dans lequel l'espace de capacité (S-2) est constitué des éléments suivants : une partie évidée arquée semi-circulaire qui communique avec l'espace d'assemblage (S-1); des parties agrandies gauche et droite (4c', 5c') qui se présentent sous une forme arquée semi-circulaire vers les côtés gauche et droit de la partie évidée arquée semi-circulaire ; et un espace de combustion (S-3) qui augmente progressivement son épaisseur vers les parties agrandies gauche et droite (4c', 5c') de la partie évidée arquée semi-circulaire.

3. Moteur à pistons opposés (A, B) selon la revendication 2, dans lequel les soupapes d'entrée et de sortie d'air (7, 35) sont agencées dans les parties agrandies gauche et droite (4c', 5c') et une bougie d'allumage (6) est agencée sur une partie inférieure d'une partie centrale entre les parties agrandies gauche et droite (4c', 5c').

4. Moteur à pistons opposés (A, B) selon l'une quelconque des revendications 1 à 3, dans lequel la partie évidée plate (4a', 5a') présente une forme approximativement parabolique.

5. Moteur à pistons opposés (A, B) selon l'une quelconque des revendications 1 à 3, dans lequel la partie évidée plate (4a', 5a') présente une forme trapézoïdale approximativement normale ou inversée.

6. Moteur à pistons opposés (A) selon l'une quelconque des revendications 1 à 5, dans lequel une chemise d'eau (11) est formée dans une périphérie extérieure du cylindre horizontal (1), des entrées d'eau de refroidissement (12) pour la chemise d'eau (11) sont respectivement agencées indépendamment sur les parties latérales gauche et droite de la chemise d'eau (11) correspondant aux côtés de piston gauche et droit et une sortie d'eau de refroidissement (13) est agencée sur une partie de la chemise d'eau (11) correspondant à un orifice d'échappement sur un côté de piston.

7. Moteur à pistons opposés (B) selon l'une quelconque des revendications 1 à 5, dans lequel une chemise d'eau (11) est formée dans une périphérie extérieure du cylindre horizontal (1), des sorties d'eau de refroidissement (13) pour la chemise d'eau sont respectivement agencées indépendamment sur des parties latérales gauche et droite de la chemise d'eau (11) correspondant aux côtés de piston gauche et droit et une entrée d'eau de refroidissement (12) est agencée sur une partie de la chemise d'eau (11) correspondant à un orifice d'aspiration sur un côté de piston.
